# EUROPEAN PATENT APPLICATION

(11) **EP 4 319 403 A1**
(43) Date of publication of application: **07.02.2024**
(21) Application number: 22779138.1
(22) Date of filing: 01.04.2022
(51) Int. Cl.: H04W 72/04

(54) **RESOURCE DETERMINATION METHOD AND APPARATUS**

(30) Priority: 02.04.2021 CN 202110363834; 11.05.2021 CN 202110513660
(71) Applicant: Datang Mobile Communications Equipment Co., Ltd., Beijing 100085 (CN)
(72) Inventor: SONG, Lei, Beijing 100085 (CN); CHEN, Runhua, Beijing 100085 (CN); GAO, Qiubin, Beijing 100085 (CN)
(74) Representative: Cabinet Nony
(86) International application number: PCT/CN2022/084828
(87) International publication number: WO 2022/206958

(57) **Abstract**

Disclosed in the present application are a resource determination method and apparatus, which are used, when transmission failure recovery (BFR) occurs, for selecting a more appropriate scheduling request (SR) resource for a physical resource in which transmission failure occurs, thereby improving the transmission reliability of an LRR, and shortening a time delay of the BFR. Provided in the present application is a resource determination method, comprising: determining a physical resource in which transmission failure occurs; and according to an association relationship between a relevant parameter of a scheduling request (SR) resource that is configured or predefined by a network side and a relevant parameter of the physical resource, determining an SR resource for the physical resource in which transmission failure occurs.

## Description

### Cross-Reference to Related Applications

This application claims priorities to Chinese Patent Application No. 202110363834.9, filed with the China National Intellectual Property Administration on April 2, 2021 and entitled "Resource Determination Method and Apparatus", and Chinese Patent Application No. 202110513660.X, filed with the China National Intellectual Property Administration on May 11, 2021 and entitled "Resource Determination Method and Apparatus", contents of which are hereby incorporated by reference in their entireties.

### Technical Field

The present application relates to the technical field of communication, in particular to a resource determination method and apparatus.

### Background

In an existing New Radio (NR) system, each cell group may be configured with a Scheduling Request (SR) resource, and when a beam failure occurs in one or more cells in the cell group, a terminal may send a Link Recovery Request (LRR) on the configured SR resource, to request a base station to allocate a Physical Uplink Shared Channel (PUSCH) communication resource, so that the terminal can report more information about beam failure (for example, an index of a cell where the beam failure occurs, reporting of a new candidate beam, etc.). Related information is carried in Beam Failure Recovery (BFR) Medium Access Control Control Element (MAC CE) signaling.

In addition, in NR Release 16 (Rel-16), it has been supported that one cell can deploy a plurality of Transmission Reception Points (TRPs) to serve the terminal simultaneously. When there are both cell based BFR and TRP based BFR in the system, there is no solution to determine an appropriate SR resource for the failed TRP or cell to achieve fast beam recovery.

### Summary

Embodiments of the present application provide a resource determination method and apparatus, to select a more appropriate SR resource for a physical resource where a transmission failure occurs when a BFR occurs, so as to increase transmission reliability of an LRR and reduce the time delay for transmission failure recovery.

At a terminal side, a resource determination method according to an embodiment of the present application includes:
determining a physical resource where a transmission failure occurs; and
determining a Scheduling Request (SR) resource for the physical resource where the transmission failure occurs, according to an association relationship between the SR resource and a parameter related to the physical resource, where the association relationship between the SR resource and the parameter related to the physical resource is configured by a network side or predefined.

Through this method, a terminal can determine a more appropriate SR resource for the physical resource where the transmission failure occurs according to the association relationship between the SR resource and the parameter related to the physical resource configured by a network side or predefined. Therefore, when the BFR occurs, the terminal may select an appropriate SR resource for the failed cell or TRP (the physical resource where the transmission failure occurs) to send the LRR, and send the LRR to a cell or a TRP that does not failed, so as to increase the transmission reliability of the LRR and reduce the time delay for transmission failure recovery.

Optionally, the SR resource for the physical resource is determined according to a predefined association relationship between the SR resource and a Beam Failure Recovery (BFR) level.

Optionally, determining the SR resource for the physical resource includes:
determining a BFR level corresponding to the physical resource according to a configuration of the network side or a predefined rule, in a condition that the transmission failure occurs to a group of physical resources; and determining an SR resource associated with the BFR level for the physical resource.

Optionally, the determining the SR resource associated with the BFR level for the physical resource includes:
determining an SR resource associated with a first level for the physical resource according to a predefined association relationship between the SR resource and the first level, in a condition that the determined BFR level is the first level; and
determining an SR resource associated with a second level for the physical resource according to a predefined association relationship between the SR resource and the second level, in a condition that the determined BFR level is the second level.

Optionally, the determining the SR resource associated with the second level for the physical resource according to the predefined association relationship between the SR resource and the second level includes:
determining the SR resource for the physical resource according to an association relationship between the SR resource and a group of physical resource indexes.

Optionally, the determining the BFR level corresponding to the physical resource according to the configuration of the network side or the predefined rule includes at least one of:
determining, by a terminal, that a BFR level of a cell is a first level or a second level or includes the first level and the second level according to a parameter configured for the cell, where the terminal determines the BFR level according to a quantity of BFD RS sets, and the terminal determines that the BFR level of the cell is the first level in a condition that one BFD RS set is configured or activated for the cell; and the terminal determines that the BFR level of the cell is the second level in a condition that two BFD RS sets are configured or activated for the cell;
determining, by the terminal, the BFR level according to a quantity of values of a CORESETPoollndex configured by the network device side, where the terminal determines that the BFR level of the cell is the first level in a condition that the quantity of values of the CORESETPoollndex is 0 or 1; and the terminal determines that the BFR level of the cell is the second level in a condition that the quantity of values of the CORESETPoollndex is 2; or
determining, by the terminal, the BFR level according to a quantity of CORESET subsets or a quantity of BFR procedures configured by the network device side, where the terminal determines that the BFR level of the cell is the first level in a condition that the quantity of CORESET subsets or the quantity of BFR procedures is 1; and the terminal determines that the BFR level of the cell is the second level in a condition that the quantity of CORESET subsets or the quantity of BFR procedures is 2.

Optionally, the SR resource for the physical resource is determined according to a predefined association relationship between the SR resource and a higher layer parameter list, where the higher layer parameter list includes a physical resource list or a BFR list.

Optionally, determining the SR resource for the physical resource includes:
determining a higher layer parameter list for the physical resource where the transmission failure occurs, or for an index of a BFR procedure, in a condition that a BFR is detected; and
determining a corresponding SR resource for the physical resource according to the determined higher layer parameter list.

Optionally, the SR resource for the physical resource is determined according to a predefined association relationship between the SR resource and a Beam Failure Detection Reference Signal (BFD RS) set.

Optionally, the determining the SR resource for the physical resource includes:
determining an SR resource associated with a BFD RS set for the physical resource, in a condition that measurement values of all BFD RSs in the BFD RS set are lower than a predefined threshold.

Optionally, the SR resource for the physical resource is determined according to a predefined association relationship between the SR resource and a CORESETPoollndex or an index of a subset of a control resource set (CORESET) configured by a higher layer.

Optionally, the determining the SR resource for the physical resource includes:
determining a corresponding SR resource for the physical resource according to a value of a CORESETPoollndex of a CORESET group or the index of a subset of a CORESET in which the transmission failure occurs.

Optionally, an SR resource i determined by a terminal is used for a CORESET group i in which the transmission failure occurs, where:
a CORESET with a CORESETPoollndex taking a value of 0 or without a CORESETPoollndex configured belongs to a CORESET group 0, and a CORESET with a CORESETPoollndex taking a value of 1 belongs to a CORESET group 1; or
a CORESET with a CORESETPoollndex taking a value of 0 or without a CORESETPoolIndex configured belongs to a CORESET group 0, a CORESET with a CORESETPoolIndex taking a value of 1 belongs to a CORESET group 1, and a group with CORESETPoolIndexs taking values of 0 and 1 belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET without a CORESETPoolIndex configured belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET with a CORESETPoolIndex taking a value of 2 belongs to a CORESET group 2; or
the k-th CORESET subset configured by a higher layer parameter belongs to a CORESET group k.

Optionally, the SR resource for the physical resource is determined according to an association relationship between the SR resource and an index of a BFR procedure configured by the network device side.

Optionally, the determining the SR resource for the physical resource includes:
determining the SR resource associated with the index of the BFR procedure for the physical resource, in a condition that the transmission failure of the physical resource corresponding to the index of the BFR procedure is detected.

Optionally, when the SR resource determined for the physical resource has a plurality of activated spatial relationships, the method further includes:
selecting, from the plurality of activated spatial relationships, a spatial relationship associated with an index of a physical resource where no transmission failure occurs to send a Link Recovery Request (LRR).

Optionally, the index of the physical resource includes one or more of: an index of a BFD RS set, or an index of a New Candidate Beam set (NBI set), an index of a BFR procedure, a value of a CORESETPoolIndex, and an index of a subset of a CORESET.

Optionally, the physical resource where the transmission failure occurs includes a group of physical resources determined from one or more groups of physical resources where the transmission failure occurs, and the SR resource is determined according to the determined group of physical resources.

Optionally, the group of physical resources is determined from the one or more groups of physical resources where the transmission failure occurs according to at least one of:
an index of Component Carrier, CC, of the physical resource where the transmission failure occurs;
an index of a physical resource where the transmission failure occurs; or
an index of a BFD RS set where the transmission failure occurs.

Optionally, the determining the SR resource according to the determined group of physical resources includes:
determining the SR resource according to a PCell or PSCell.

Optionally, the method further includes:
sending a Link Recovery Request (LRR) to a network side device on the determined SR resource.

At a network side, a resource determination method according to an embodiment of the present application includes:
configuring an association relationship between an SR resource and a parameter related to a physical resource; where the physical resource is a cell or a Transmission Reception Point (TRP) where a transmission failure occurs; and
notifying a terminal of the association relationship for the terminal to determine an SR resource for the physical resource according to the association relationship.

Optionally, the parameter related to the physical resource includes:
a Beam failure Recovery (BFR) level; or,
a higher layer parameter list; or,
a Beam Failure Detection Reference Signal (BFD RS) set; or,
a (CORESETPoolIndex) or an index of a subset of a control resource set (CORESET).

At a network side, an information communication method according to an embodiment of the present application includes:
sending a notification including a Beam Failure Recovery (BFR) level to a terminal, where the BFR level includes a first level and/or a second level.

Optionally, the notification further includes information about a Beam Failure Detection Reference Signal (BFD RS) set.

At a terminal side, an information communication method according to an embodiment of the present application includes:
acquiring a notification including a Beam Failure Recovery (BFR) level sent by a network side; and
acquiring the BFR level from the notification.

Optionally, the method further includes: acquiring information about a Beam Failure Detection Reference Signal (BFD RS) set from the notification.

Optionally, the method further includes:
determining information about a BFD RS set according to the BFR level.

At a terminal side, a resource determination apparatus according to an embodiment of the present application includes:
a memory configured to store program instructions; and
a processor configured to invoke the program instructions stored in the memory and perform in accordance with an obtained program:
   determining a physical resource where a transmission failure occurs; and
   determining a Scheduling Request (SR) resource for the physical resource where the transmission failure occurs, according to an association relationship between the SR resource and a parameter related to the physical resource, where the association relationship between the SR resource and the parameter related to the physical resource is configured by a network side or predefined.

Optionally, the SR resource for the physical resource is determined according to a predefined association relationship between the SR resource and a Beam Failure Recovery (BFR) level.

Optionally, the determining the SR resource for the physical resource includes:
determining a BFR level corresponding to the physical resource according to a configuration of the network side or a predefined rule, in a condition that the transmission failure occurs to a group of physical resources; and determining an SR resource associated with the BFR level for the physical resource.

Optionally, the determining the SR resource associated with the BFR level for the physical resource includes:
determining an SR resource associated with a first level for the physical resource according to a predefined association relationship between the SR resource and the first level, in a condition that the determined BFR level is the first level; and
determining an SR resource associated with a second level for the physical resource according to a predefined association relationship between the SR resource and the second level, in a condition that the determined BFR level is the second level.

Optionally, the determining the SR resource associated with the second level for the physical resource according to the predefined association relationship between the SR resource and the second level includes:
determining the SR resource for the physical resource according to an association relationship between the SR resource and a group of physical resource indexes.

Optionally, the determining the BFR level corresponding to the physical resource according to the configuration of the network side or the predefined rule includes at least one of:
determining, by a terminal, that a BFR level of a cell is a first level, or a second level, or includes the first level and the second level according to a parameter configured for the cell, where the terminal determines the BFR level according to a quantity of BFD RS sets, and the terminal determines that the BFR level of the cell is the first level in a condition that one BFD RS set is configured or activated for the cell; and the terminal determines that the BFR level of the cell is the second level in a condition that two BFD RS sets are configured or activated for the cell;
determining, by the terminal, the BFR level according to a quantity of values of a CORESETPoolIndex configured by the network device side, where the terminal determines that the BFR level of the cell is the first level in a condition that the quantity of values of the CORESETPoolIndex is 0 or 1; and the terminal determines that the BFR level of the cell is the second level in a condition that the quantity of values of the CORESETPoolIndex is 2; or
determining, by the terminal, the BFR level according to a quantity of CORESET subsets or a quantity of BFR procedures configured by the network device side, where the terminal determines that the BFR level of the cell is the first level in a condition that the quantity of CORESET subsets or the quantity of BFR procedures is 1; and the terminal determines that the BFR level of the cell is the second level in a condition that the quantity of CORESET subsets or the quantity of BFR procedures is 2.

Optionally, the SR resource for the physical resource is determined according to a predefined association relationship between the SR resource and a higher layer parameter list, where the higher layer parameter list includes a physical resource list or a BFR list.

Optionally, the determining the SR resource for the physical resource includes:
determining a higher layer parameter list for the physical resource where the transmission failure occurs, or for an index of a BFR procedure, in a condition that a BFR is detected; and
determining a corresponding SR resource for the physical resource according to the determined higher layer parameter list.

Optionally, the SR resource for the physical resource is determined according to a predefined association relationship between the SR resource and a BFD RS set.

Optionally, the determining the SR resource for the physical resource includes:
determining an SR resource associated with a BFD RS set for the physical resource, in a condition that measurement values of all BFD RSs in the BFD RS set are lower than a predefined threshold.

Optionally, the SR resource for the physical resource is determined according to a predefined association relationship between the SR resource and a CORESETPoolIndex, or an index of a subset of a CORESET configured by a higher layer.

Optionally, the determining the SR resource for the physical resource includes:
determining a corresponding SR resource for the physical resource according to a value of a CORESETPoolIndex of a CORESET group or the index of a subset of a CORESET in which the transmission failure occurs.

Optionally, an SR resource i determined by a terminal is used for a CORESET group i in which the transmission failure occurs, where
a CORESET with a CORESETPoolIndex taking a value of 0 or without a CORESETPoolIndex configured belongs to a CORESET group 0, and a CORESET with a CORESETPoolIndex taking a value of 1 belongs to a CORESET group 1; or
a CORESET with a CORESETPoolIndex taking a value of 0 or without CORESETPoolIndex configured belongs to a CORESET group 0, a CORESET with a CORESETPoolIndex taking a value of 1 belongs to a CORESET group 1, and a group with CORESETPoolIndexs taking values of 0 and 1 belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET without a CORESETPoolIndex configured belongs to a CORESET group 2; or
a CORESET with a of CORESETPoolIndex taking values of 0 belongs to a CORESET group 0, a CORESET with a CORESETPoolIndex taking a value of 1 belongs to a CORESET group 1, and a CORESET with a CORESETPoolIndex taking a value of 2 belongs to a CORESET group 2; or
the k-th CORESET subset configured by a higher layer parameter belongs to a CORESET group k.

Optionally, the SR resource for the physical resource is determined according to an association relationship between the SR resource and an index of a BFR procedure configured by the network device side.

Optionally, the determining the SR resource for the physical resource includes:
determining the SR resource associated with the index of the BFR procedure for the physical resource, in a condition that the transmission failure of the physical resource corresponding to the index of the BFR procedure is detected.

Optionally, when the SR resource determined for the physical resource has a plurality of activated spatial relationships, the processor is further configured to:
select, from the plurality of activated spatial relationships, a spatial relationship associated with an index of a physical resource where no transmission failure occurs to send a Link Recovery Request (LRR).

Optionally, the index of the physical resource includes one or more of: an index of a BFD RS set, or an index of a New Candidate Beam set (NBI set), an index of a BFR procedure, a value of a CORESETPoolIndex, and an index of a subset of a CORESET.

Optionally, the physical resource where the transmission failure occurs includes a group of physical resources determined from one or more groups of physical resources where the transmission failure occurs, and the SR resource is determined according to the determined group of physical resources.

Optionally, the group of physical resources is determined from the one or more groups of physical resources where the transmission failure occurs according to at least one of:
an index of Component Carrier (CC) of the physical resource where the transmission failure occurs;
an index of a physical resource where the transmission failure occurs; or
an index of a BFD RS set where the transmission failure occurs.

Optionally, the processor is configured to determine the SR resource according to a PCell or PSCell.

Optionally, the processor is further configured to:
send a Link Recovery Request (LRR) to a network side device on the determined SR resource.

At a network side, a resource determination apparatus according to an embodiment of the present application includes:
a memory configured to store program instructions; and
a processor configured to invoke the program instructions stored in the memory and perform in accordance with an obtained program:
   configuring an association relationship between an SR resource and a parameter related to a physical resource; where the physical resource is a cell or a TRP where a transmission failure occurs; and
   notifying a terminal of the association relationship for the terminal to determine an SR resource for the physical resource according to the association relationship.

Optionally, the parameter related to the physical resource includes:
a Beam failure Recovery (BFR) level; or,
a higher layer parameter list; or,
a Beam Failure Detection Reference Signal (BFD RS) set; or,
a CORESETPoolIndex, or an index of a subset of a CORESET.

At a network side, an information communication apparatus according to an embodiment of the present application includes:
a memory configured to store program instructions; and
a processor configured to invoke the program instructions stored in the memory and perform in accordance with an obtained program:
   sending a notification including a Beam Failure Recovery (BFR) level to a terminal, where the BFR level includes a first level and/or a second level.

Optionally, the notification further includes information about a BFD RS set.

At a terminal side, an information communication apparatus according to an embodiment of the present application includes:
a memory configured to store program instructions; and
a processor configured to invoke the program instructions stored in the memory and perform in accordance with an obtained program:
   acquiring a notification including a Beam Failure Recovery (BFR) level sent by a network side; and
   acquiring the BFR level from the notification.

Optionally, the processor is further configured to invoke the program instructions stored in the memory and perform in accordance with the obtained program:
acquiring information about a BFD RS set from the notification.

Optionally, the processor is further configured to invoke the program instructions stored in the memory and perform in accordance with the obtained program:
determining information about a BFD RS set according to the BFR level.

At a terminal side, another resource determination apparatus according to an embodiment of the present application includes:
a first determination unit, configured to determine a physical resource where a transmission failure occurs; and
a second determination unit, configured to determine a Scheduling Request (SR) resource for the physical resource where the transmission failure occurs, according to an association relationship between the SR resource and a parameter related to the physical resource, where the association relationship between the SR resource and the parameter related to the physical resource is configured by a network side or predefined.

At a network side, another resource determination apparatus according to an embodiment of the present application includes:
a configuration unit, configured to configure an association relationship between an SR resource and a parameter related to a physical resource; where the physical resource is a cell or a Transmission Reception Point (TRP) where a transmission failure occurs; and
a notifying unit, configured to notify a terminal of the association relationship for the terminal to determine an SR resource for the physical resource according to the association relationship.

At a network side, another information communication apparatus according to an embodiment of the present application includes:
a notifying unit, configured to send a notification including a Beam Failure Recovery (BFR) level to a terminal, where the BFR level includes a first level and/or a second level.

At a terminal side, another information communication apparatus according to an embodiment of the present application includes:
a first acquiring unit, configured to acquire a notification including a Beam Failure Recovery (BFR) level sent by a network side; and
a second acquiring unit, configured to acquire the BFR level from the notification.

An embodiment of the present application provides a computing device, the computing device includes a memory and a processor, the memory is configured to store program instructions, the processor is configured to invoke the program instructions stored in the memory and perform any one of the above methods in accordance with an obtained program.

An embodiment of the present application provides a computer storage medium for storing computer program instructions, where the computer program instructions are configured to cause a computer to perform any one of the above methods.

### Brief Description of Figures

In order to illustrate technical solutions in embodiments of the present application more clearly, drawings that need to be used in describing embodiments will be introduced below briefly. Obviously the drawings described below are only some embodiments of the present application, and other drawings can also be obtained by those ordinary skilled in the art according to these drawings without creative labor.
Fig. 1 is a schematic diagram of SCell A and SCell C performing a beam failure recovery mechanism at the TRP level, and SCell B and SCell D performing a beam failure recovery mechanism at the cell level according to an embodiment of the present application.
Fig. 2 is a flowchart of a resource determination method at a terminal side according to an embodiment of the present application.
Fig. 3 is a flowchart of a resource determination method at a network side according to an embodiment of the present application.
Fig. 4 is a schematic structural diagram of a resource determination apparatus at a terminal side according to an embodiment of the present application.
Fig. 5 is a schematic structural diagram of a resource determination apparatus at a network side according to an embodiment of the present application.
FIG. 6 is a schematic structural diagram of another resource determination apparatus at a terminal side according to an embodiment of the present application.
Fig. 7 is a schematic structural diagram of another resource determination apparatus at a network side according to an embodiment of the present application.
Fig. 8 is a flowchart of an information communication method at a network side according to an embodiment of the present application.
Fig. 9 is a flowchart of an information communication method at a terminal side according to an embodiment of the present application.
Fig. 10 is a schematic structural diagram of an information communication apparatus for transmitting information at a network side according to an embodiment of the present application.
Fig. 11 is a schematic structural diagram of an information communication apparatus at a terminal side according to an embodiment of the present application.

### Detailed Description

Technical solutions of embodiments of the present application will be described clearly and completely below in combination with the drawings of embodiments of the present application. Obviously, the described embodiments are only a part of embodiments of the present application but not all embodiments. Based upon embodiments of the present application, all of other embodiments obtained by those ordinary skilled in the art without creative work pertain to the protection scope of the present application.

In NR Release 16 (Rel-16), it has been supported that one cell can deploy a plurality of Transmission Reception Points (TRPs) to serve the terminal simultaneously. In the beam failure recovery based on a plurality of TRPs, it has been supported that at most two SR resources are configured for the plurality of TRPs, which are used by the terminal to apply for resources for the plurality of TRPs respectively to send a Beam Failure Recovery (BFR) MAC-CE. For example, spatial relationships of the two SR resources are beams pointing to two TRPs respectively, and when one TRP fails, the terminal may select to send a Link Recovery Request (LRR) to the TRP that does not fail, so as to increase the transmission reliability of the LRR and reduce the time delay for transmission failure recovery.

However, a cell group may include a plurality of cells, some cells may have only one TRP, and some cells may have a plurality of TRPs; a terminal of some cells performs beam failure reporting at the TRP level, and a terminal of some cells performs beam failure reporting at the cell level, and even the same cell may support both beam reporting at the TRP level and beam reporting at the cell level. In this case, all cells in a cell group may only be configured with a maximum of three SR resources (one SR resource at the cell level and two SR resources at the TRP level), and there is a problem of how to determine the appropriate SR resource for the beam failure reporting of each cell or TRP. If the SR resource is determined to be inappropriate, the terminal may send the LRR to a cell or a TRP with a poor link quality, reducing the transmission reliability of the LRR and increasing the time delay for beam failure recovery. In particular, a cell adopting a cell-level BFR may have large-scale parameters such as propagation environment and spatial relationship similar to a certain TRP of another cell (for example, in an intra-band carrier aggregation (intra-band CA) scenario), and when selecting an SR resource, Cells or TRPs with similar link transmission conditions should select the same SR resource.

Therefore, embodiments of the present application provide a resource determination method and apparatus, to select a more appropriate SR resource for a physical resource having a transmission failure when a BFR occurs, so as to increase the transmission reliability of an LRR and reduce the time delay for beam failure recovery.

The method and the apparatus are based on the same inventive concept, and since the method and the apparatus have similar principles for solving problems, implementations of the apparatus and the method can be referred to each other, and repetition is not repeated.

Technical solutions according to embodiments of the present application may be applicable to various systems, especially a 5G system. For example, the applicable system may be: a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, an Universal Mobile Telecommunication System (UMTS), a Worldwide interoperability for Microwave Access (WiMAX) system, a 5G system and a 5G NR system, etc. These systems all include terminal devices and network devices.

The terminal device involved in embodiments of the present application may be a device for providing voice and/or data connectivity to the user, a handheld device with the wireless connection function, or other processing device connected to the wireless modem. In different systems, the terminal device may have different names. For example, in a 5G system, the terminal device may be referred to as User Equipment (UE). The wireless terminal device can communicate with one or more core networks via the Radio Access Network (RAN), and the wireless terminal device may be a mobile terminal, such as a mobile telephone (or called "cellular" telephone), and a computer with the mobile terminal, for example, may be a portable mobile device, a pocket mobile device, a handheld mobile device, a computer built-in mobile device or a vehicle-carried mobile device, which exchange the voice and/or data with the radio access network. For example, the wireless terminal device may be a Personal Communication Service (PCS) telephone, a cordless telephone, a Session Initiation Protocol (SIP) telephone, a Wireless Local Loop (WLL) station, a Personal Digital Assistant (PDA) and other devices. The wireless terminal device may also be called as a system, a subscriber unit, a subscriber station, a mobile station, mobile, a remote station, an access point, a remote terminal, an access terminal, a user terminal, a user agent, a user device, which is not limited in embodiments of the present application.

The network device involved in embodiments of the present application may be a base station, and the base station may include a plurality of cells. Depending on specific application scenarios, the base station may also be called as an access point, or may refer to a device in an access network communicating with the wireless terminal via one or more sectors over the air interface or other names. The network device may be used to perform inter-conversion between a received air frame and Internet Protocol (IP) packet, and used as a router between the wireless terminal device and the rest of the access network, where the rest of the access network may include IP networks. The network device may further coordinate attribute management of the air interface. For example, the network device involved in embodiments of the present application may be a network device (Base Transceiver Station (BTS)) in the Global System of Mobile communication (GSM) or in a Code Division Multiple Access (CDMA), or may be a network device (NodeB) in the Wideband Code Division Multiple Access (WCDMA), or may be an evolutional network device (evolutional Node B (eNB or e-NodeB)) in the Long Term Evolution (LTE) system, a 5G base station in the 5G network architecture (next generation system), or may be a Home evolved Node B (HeNB), a relay node, a femto, a pico, etc., which is not limited in embodiments of the present application.

Embodiments of the present application will be described below in detail with reference to the drawings of the specification. It should be noted that a showing order of embodiments of the present application only represents a sequential order of embodiments, but does not represent pros and cons of the technical solutions according to embodiments.

Embodiments of the present application provide a scheduling request (SR) resource determination solution, for a terminal to select an appropriate SR resource when a beam failure (that is, transmission failure) occurs to a physical resource (for example, a cell or a Transmission Reception Point (TRP)). Further, a corresponding spatial relationship (that is, a parameter related to a sending filter used when the LRR is sent on the SR resource, or for indicating a direction of a sending beam) may be selected, and a LRR may be sent to a cell or a TRP that does not fail, to increase the transmission reliability of the LRR and reduce the time delay of transmission failure recovery.

In an embodiment of the present application, the terminal determines an SR resource and a parameter of a spatial relationship on the SR resource for the cell or TRP where the beam failure occurs according to the quantity of SR resources or spatial relationships of SR resources configured by the network device and one or a combination of following parameters, and sends the LRR on the determined SR resource:
a BFR level of a failed cell or a failed TRP, a quantity of Beam Failure Detection (BFD) Reference Signals (RS), an association relationship between BFD RSs and SR resources, a higher layer parameter of a control resource set (CORESET, a set of physical resources, i.e., a specific area on a NR downlink resource grid), an association relationship between subsets of the CORESET and SR resources.

In the embodiments of the present application, the beam failure means that the transmission failure.

The terminal determines the SR resource by the following approaches.

Approach 1: an association relationship between an SR resource and a BFR level is established, and an association relationship between an SR resource and a TRP index is further established. The terminal determines a corresponding SR resource according to a determined BFR level. The BFR level may be a first level or a second level. In addition, two levels, namely, the first level and the second level, may be configured for the BFR level in advance. The first level is, for example, a TRP level and the second level is, for example, a cell level.

Step 1: the network side configures a plurality of SR resources for a cell group in advance, where a part of the SR resources is used for reporting BFR at the cell level, and the other part of the SR resources is used for reporting BFR at the TRP level.

For example, the network device configures N SR resources (N=1, 2, 3, ... , etc.) for one cell group (actually, this may only be applicable to the case where N=3), where N1 (for example, N1=1) SR resource is used for reporting BFR at the cell level, and N2 (for example, N2=2) SR resources are used for reporting BFR at the TRP level; no matter what the values of N1 and N2 are, N=N1+N2 is always satisfied.

Step 2: when beam failure occurs in a certain cell or TRP, the terminal determines the BFR level according to a configuration of a network device side or a predefined rule.

As for the configuration of the network device side, the network device side may configure a BFR level of a cell in the cell as a cell-level BFR (that is, the BFR at the second level), or a TRP-level BFR (that is, the BFR at the first level), or both the cell-level BFR and the TRP-level BFR. For example, a higher layer parameter BFR_level indicating a BFR level can be configured in a cell configuration or in a BWP (BWP-UplinkCommon or BWP-UplinkDedicated) within a cell or in a BFR related configuration (BeamFailureRecoveryConfig or BeamFailure Recovery SCellConfig). A value of the higher layer parameter BFR_level may be Cell_specific, or TRP_specific, or Cell_specific and TRP_specific. For example, following two configurations indicate that one cell (or Component Carrier, CC) can only be configured with one BFR level: 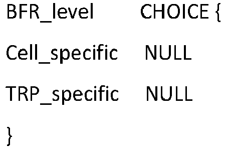 or
BFR_level ENUMERATED { Cell_specific, TRP_specific }.

For another example, the following configuration indicates that one cell (or CC) may be configured with one or two BFR levels:

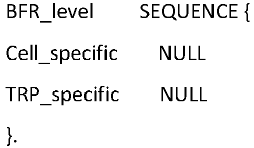

For another example, more detailed parameters can be configured under the parameter Cell_specific or TRP_specific, such as the quantity of BFD RS sets and BFD RSs included in each BFD RS set, for example:

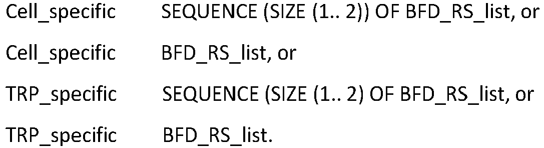

BFD_RS_list is a higher layer parameter corresponding to BFD RS set, and may also be a higher layer parameter such as failureDetectionResourcesToAddModList or RadioLinkMonitoringRS in the existing protocol.

Through the explicit configuration of the network side device, the terminal may determine the BFR level of a certain cell. According to the BFR level configured by the network side device, the terminal may also determine the quantity of BFD RS sets.

If the quantity of the BFD RS sets is not explicitly configured, when the network side device configures the BFR at the second level (i.e., the cell-level BFR, corresponding to the parameter Cell_specific) for the terminal, the terminal may determine that the quantity of the BFD RS set is 1; when the network side device configures BFR at the first level (i.e., the TRP-level BFR, corresponding to the parameter TRP_specific) for the terminal, the terminal may determine that the quantity of the BFD RS sets is 2. Even if the network side does not explicitly configure the BFD RS set, the terminal may determine the quantity of BFD RS sets according to the related configuration of the BFR level, and then determine the BFD RS. For example, the terminal determines the BFD RS included in each BFD RS set according to the quantity of BFD RS sets and/or CORESET related higher layer parameter (CORESETPoollndex). For example, if the quantity of BFD RS set is 1, the terminal determines that the BFD RS set includes a reference signal index in a TCI state of CORESET including a to-be-monitored PDCCH; if the quantity of BFD RS sets is 2, the terminal determines that the first BFD RS set (BFD RS set 0 or a BFD RS set with a lower index value in the cell) includes the reference signal index in the TCI state of the CORESET including the to-be-monitored PDCCH in the CORESET with a CORESETPoolIndex taking the value of 0; the terminal determines that the second BFD RS set (BFD RS set 1 or the BFD RS set with a higher index value in the cell) includes the reference signal index in the TCI state of the CORESET including the to-be-monitored PDCCH in the CORESET with a CORESETPoolIndex taking the value of 1. If the CORESET with the CORESETPoolIndex taking the value of 0 or 1 in a time slot or a time unit does not include the to-be-monitored PDCCH (that is, there is no to-be-monitored search space set), the corresponding BFD RS set is empty, that is, there is no corresponding BFD RS set.

If the BFR of the cell level and the TRP level is configured, the terminal may further determine the BFR level of the cell when a certain failure occurs according to a predefined rule or a dynamic indication of the network device side.

The predefined rule may be that the BFR level is determined according to the quantity of BFD RS sets. When one BFD RS set is configured or activated for the cell, it indicates that the cell-level BFR is performed in the cell, and when two BFD RS sets are configured or activated for the cell, it indicates that the TRP-level BFR is performed in the cell.

The BFR level is determined according to the predefined rule. For example, the BFR level is determined according to the quantity of BFD RS sets. When one BFD RS set is configured or activated for the cell, it indicates that BFR is performed at the cell level in the cell; when two BFD RS sets are configured or activated for the cell, it indicates that BFR is performed at the TRP level in the cell.

Step 3: the terminal determines the SR resource according to the determined BFR level. If the BFR level is the cell level, the terminal may directly determine the corresponding SR resource; if the BFR level is the TRP level, the terminal determines the corresponding SR resource according to a TRP index (i.e. a group of physical resource indexes, such as an index of a BFD RS set or an index of a New candidate beam set (NBI) set, an index of a BFR procedure, a value of a CORESETPoolIndex, an index of a subset of a CORESET, etc.). A quantity of the value of the CORESETPoolIndex may be 1 or 2, or the value of the CORESETPoolIndex may not be configured, that is, the quantity of the value of the CORESETPoolIndex is 0.

The terminal determines an SR resource to be used to send the LRR according to a predefined rule. The predefined rule may be at least one of followings.

In each cell, the BFD RS set, or the NBI set, or the BFR procedure, or the subset of the CORESET, or the value of CORESETPoolIndex with the k-th (k=0 or 1) index is associated with the SR resource with the k-th index among the SR resources for TRP level, that is, when a failure occurs, the SR resource with the k-th index is selected to send the LRR.

When BFD RS sets, NBI sets, or BFR procedures of all cells are numbered uniformly, the SR resource may be determined according to a predefined formula, for example, the corresponding SR resource may be determined according to a result value of modulus of N2 by the index of the BFD RS set, the index of the NBI set, or the index of the BFR procedure.

Approach 2: the network device configures an association relationship between an SR resource and a high layer parameter list, where the higher layer parameter list includes a physical resource list or a BFR list (BFR_list). The physical resource list, such as a TRP list (TRP_list) or a set of cells or TRPs with similar spatial relationships, and for another example, the BFR_list is used to represent a set of cells or TRPs with similar BFR characteristics. An association of the TRP_list or BFR_list with the SR resource is established.

Step 1: the network device configures N SR resources (N=1, 2, 3... etc.) and K number of TRP_lists or BFR_lists for a cell group, each TRP_list or BFR_list is associated with one SR resource.

For example, each TRP_list includes a set of cells or TRPs with similar TCI states or spatial relationships:
TRP_list1: CC index p, CC index q, CC index r TRP 1, CC index s TRP 1...
TRP_list2: CC index o, CC index r TRP 2, CC index s TRP 2...

Each cell or index may only appear in one TRP_list.

For another example, each BFR_list includes a set of BFR procedures corresponding to a set of cells or TRPs with similar TCI states or spatial relationships (the BFR procedures may be numbered globally in the cell group):
BFR_list1: BFR procedure a, b, c, d...
BFR_list2: BFR procedure x, y, z...

Each BFR procedure may only appear in one BFR_list.

Step 2: when detecting the BFR, the terminal determines the TRP_list or the BFR_list where the cell or TRP having the beam failure is located, or where an index of BFR procedure is located according to the BFR procedure, an index of a BFD RS set, a CORESET higher layer parameter CORESETPoolIndex, an index of a CORESET subset, etc.

Step 3: the terminal determines the SR resource associated with the list according to the determined the cell or TRP, or the determined index of BFR procedure, and sends the LRR on the determined SR resource.

Approach 3: an association relationship between an SR resource and a BFD RS set is established. The difference of Approach 3 from Approach 1 is that the BFR level is not determined.

Step 1: the network device configures an associated SR resource for each BFD RS set, and the quantity of associated SR resources of BFD RS sets of all cells in a cell group does not exceed N.

Step 2: when the terminal detects that measurement values of all RSs in a BFD RS set are lower than a certain threshold, the terminal sends an LRR on the SR resource associated with the BFD RS set.

Approach 4: an association relationship between an SR resource and a CORESETPoolIndex or an index of a subset of a CORESET configured by a higher layer is established. The difference of Approach 4 from Approach 1 is that the BFR level is not determined.

Step 1: the network device configures N SR resources (N=1, 2, 3... , etc.) for a cell group. where an SR resource i is used for a beam failure case corresponding to a CORESET group i.

Step 2: the terminal determines an associated SR resource according to the value of the CORESETPoolIndex of the CORESET group in which the beam failure occurs or the index of the subset of the CORESET, and sends the LRR on the SR resource.

For example, an SR resource i determined by the terminal is used for a CORESET group i in which the transmission failure occurs:
a CORESET with a CORESETPoolIndex taking a value of 0 or without CORESETPoolIndex configured belongs to a CORESET group 0, and a CORESET with a CORESETPoolIndex taking a value of 1 belongs to a CORESET group 1; or
a CORESET with a CORESETPoolIndex taking a value of 0 or without a CORESETPoolIndex configured belongs to a CORESET group 0, a CORESET with a CORESETPoolIndex taking a value of 1 belongs to a CORESET group 1, and a group with CORESETPoolIndexs taking values of 0 and 1 belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET without a CORESETPoolIndex configured belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET with a CORESETPoolIndex taking a value of 2 belongs to a CORESET group 2; or
the k-th CORESET subset configured by a higher layer parameter belongs to a CORESET group k.

Optionally, the method according to embodiments of the present application may further include the step of the terminal determining a spatial relationship of an SR resource.

When the SR resource determined for the physical resource has a plurality of activated spatial relationships, selecting, from the plurality of activated spatial relationships, a spatial relationship associated with an index of a physical resource where no transmission failure occurs to send a Link Recovery Request (LRR). The index of the physical resource includes one or more of the following indexes: an index of a BFD RS set, an index of a NBI set, an index of a BFR procedure, a value of a CORESETPoolIndex, or an index of a subset of CORESET.

For example, if each SR resource has 2 or more activated spatial relationships, a spatial relationship of the selected SR resource needs to be further determined.

For example, when the quantity of cells or TRPs selecting the same SR resource is greater than 1, the terminal determines the spatial relationship according to the TRP having a smaller cell index or a smaller TRP index among the TRPs where the beam failure occurs. For example, a spatial relationship associated with a TRP where no beam failure occurs is selected (for example, two activated spatial relationships are associated with TRP1 and TRP2 respectively).

A description of several specific embodiments is given below.

Embodiment 1 is as follows.

A plurality of SR resources may be configured for the terminal for reporting BFR at different levels. The specific steps are as follows.

Step 1: The network device configures N SR resources (N=1, 2, 3... , etc.) for a cell group. where N1 number of SR resources are used for reporting BFR at the cell level, and N2 number of SR resources are used for reporting BFR at the TRP level.

Among the N SR resources configured by the network device for one cell group, the SR resource to be used for reporting BFR at the cell level or the TRP level may be configured by the network device side or determined by the terminal according to a predefined rule.

For example, when N=3, an SR resource 1 is configured for reporting BFR at the cell level, and SR resources 0 and 2 are configured for reporting BFR at the TRP level. The SR resource configuration may include a higher layer parameter indicating the BFR level corresponding to the corresponding SR resource. For another example, when N=2, the network device side may configure the SR resource 0 to be used for reporting BFR at the cell level, and the SR resource 1 to be used for BFR reporting at the TRP level.

When N=3, it may also be determined through a predefined rule that the SR resource 0 is used for reporting BFR at the cell level, and SR resources 1 and 2 are used for reporting BFR at the TRP level. When N=2, it is determined through a predefined rule that the SR resource 0 is used for reporting BFR at the cell level, and the SR resource 1 is used for reporting BFR at the TRP level.

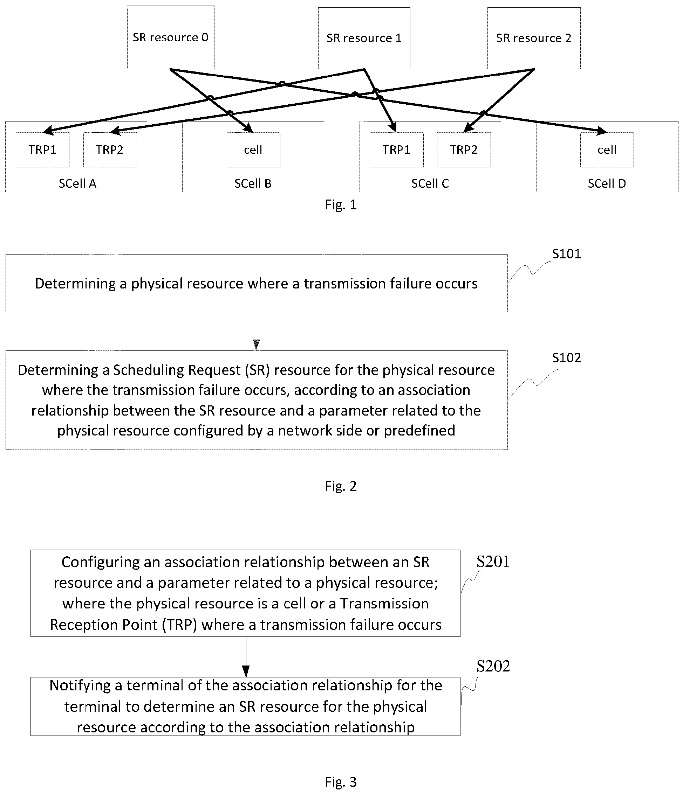

For example, taking N1=1 and N2=2 as an example, as shown in Fig. 1, there are four cells in a cell group at this time, the four cells are Secondary Cells (SCells) A, B, C and D, and SCell is only taken as an example for description here. It is also possible to replace one of the SCells with a Primary Cell (PCell). In Fig. 1, the beam failure recovery mechanism at the TRP level is performed in the SCell A and SCell C, and the beam failure recovery mechanism at the cell level is performed in the SCell B and SCell D. The SR resource 0 is used for beam failure recovery at the cell level, and the SR resources 1 and 2 are used for beam failure recovery at the TRP level, which is equivalent to establishing an association relationship between the SR resource and the BFR level.

Step 2: when beam failure occurs in a certain cell or TRP, the terminal determines a BFR level of the cell according to the BFR level configured by the network device side or according to a predefined rule.

When a beam failure occurs, the terminal may determine the BFR level according to at least one of the following methods.

As for the configuration at the network device side, the network device side may configure the BFR level of a cell in the cell as a cell-level BFR, or a TRP-level BFR, or both the cell-level BFR and the TRP-level BFR. For example, the BFR level may be configured in a serving cell related configuration (a higher layer parameter ServingCellConfig), or in a BandWidth Part (BWP) configuration (a higher layer parameter BWP-DownlinkDedicated or a higher layer parameter RadioLinkMonitoringConfig below it). If both the cell-level BFR and TRP-level BFR are configured, the terminal may further determine the BFR level of the cell when a certain beam failure occurs according to a predefined rule or a dynamic indication of the network device side. The predefined rule may be that the BFR level is determined according to the quantity of BFD RS sets, and when one BFD RS set is configured or activated for the cell, it indicates that BFR is performed at the cell level in the cell, and when two BFD RS sets are configured or activated for the cell, it indicates that BFR is performed at the TRP level in the cell.

The BFR level is determined according to the predefined rule. For example, the BFR level is determined according to the quantity of BFD RS sets. When one BFD RS set is configured or activated for the cell, it indicates that BFR is performed at the cell level in the cell; when two BFD RS sets are configured or activated for the cell, it indicates that BFR is performed at the TRP level in the cell.

Through this step, the terminal can determine a level of the BFR occurring in each cell.

Step 3: the terminal determines the SR resource according to the determined BFR level. If the BFR level is the cell level, the terminal may directly determine the corresponding SR resource; if the BFR is at the TRP level, the terminal determines the corresponding SR resource according to a TRP index (an index of a BFD RS set or an index of a NBI set, an index of a BFR procedure, a value of a CORESETPoolIndex, an index of a subset of a CORESET, etc.).

If the BFR level is the cell level, the cell corresponds to only one SR resource, that is, no further selection is required; if the BFR level is the TRP level, it may correspond to at most two SR resources, and when the quantity of SR resources for the TRP level is two, it is required to further determine which SR resource is used to send the LRR. In this embodiment, the terminal may determine the corresponding SR resource through at least one of the following predefined rules according to the TRP index (an index of a BFD RS set or an index of a NBI set, an index of a BFR procedure, a value of a CORESETPoolIndex, an index of a subset of a CORESET, etc.).

In each cell, the BFD RS set, or the NBI set, or the BFR procedure, or the subset of the CORESET with the k-th (k=0 or 1) index, or the value of the CORESETPoolIndex is k (k=0 or 1) is associated with the SR resource with the k-th index in the SR resources for TRP level, that is, when a failure occurs, the SR resource with the k-th index is selected to send the LRR. The k-th index mentioned above refers to the k-th index determined according to the order of index values from small to large. When N=3, SR resources 1 and 2 are used for BFR reporting at the TRP level, and the k-th index in the SR resources for the TRP level refers to the k-th index in SR resources 1 and 2.

When indexes of BFD RS sets, NBI sets, BFR procedures, or subsets of the CORESET of all cells are numbered uniformly, the SR resource may be determined according to a predefined formula. For example, when a modulo result of the index of BFD RS set, the index of NBI set, the index of the BFR procedure or the index of the subset of the CORESET to 2 is 0, the SR resource with the lowest index in the SR resources for the TRP level is selected to send the LRR; when the modulo result of the index of BFD RS set, the index of NBI set, the index of the BFR procedure or the index of the subset of the CORESET to 2 is 1, the SR resource with the in index among the SR resources for the TRP level is selected to send the LRR. Conversely, for example, when the modulo result of the index of BFD RS set, the index of NBI set, the index of the BFR procedure or the index of the subset of the CORESET to 2 is 1, the SR resource with the lowest index in the SR resources for TRP level is selected to send the LRR; when the modulo result of the index of BFD RS set, the index of NBI set, the index of the BFR procedure or the index of the subset of the CORESET to 2 is 0, the SR resource with the highest index in the SR resources for the TRP level is selected to send the LRR.

For example, the SR resource 1 is associated with a TRP with a TRP index of 1 of each cell (e.g., the TRP1 of the SCell A and the TRP1 of the SCell C), and the SR resource 2 is associated with a TRP with a TRP index of 2 of each cell (e.g., the TRP2 of the SCell A and the TRP2 of the SCell C). The method is applicable to a scenario in which TRPs1 of all cells are deployed together and TRPs2 of all cells are deployed together (and the TRP2 and the TRP1 are physically separated to a certain extent). Thus, when the TRP1 of the SCell A fails, there is a certain probability that the TRP1 of the SCell C also fails, and the spatial relationship of the SR resource can be set to point to the direction of TRP2 of each cell. As such, the LRR may be sent to the TRP2 where no failure occurs when the TRP1 of the SCell A and the TRP 1 of the Scell C fail, to increase the transmission reliability of the LRR and reducing the time delay for transmission failure recovery. The TRP2 where no failure occurs here may be the TRP of the cell where the SR resource is located. For example, in a Carrier Aggregation (CA) scenario, the PCell or PSCell may be configured with an SR resource (that is, a Physical Uplink Control Channel, PUCCH). TRP2 may be the TRP2 of the PCell. In a Dual Connectivity (DC) scenario, the TRP2 may be a TRP2 of a PCell or a Primary Secondary Cell Group Cell (Primary SCG Cell, PSCell). It is dependent on which PUCCH the network device side configures the SR resource on.

Optionally, this embodiment may also include following steps.

Step 4: The terminal determines a spatial relationship of the selected SR resource.

If each SR resource has 2 or more activated spatial relationships, the spatial relationship of the selected SR resource needs to be further determined. For example, when the quantity of cells or TRPs selecting the same SR resource is greater than 1, the terminal determines the spatial relationship according to the TRP having a smaller cell index or TRP index in the TRPs where the failure occurs, for example, the spatial relationship associated with the non-failed TRP is selected (e.g., two activated spatial relationships are associated with TRP1 and TRP2 respectively).

The specific method may be that the network device side configures that two spatial relationships on the SR resource respectively correspond to TRP index 1 and TRP index 2, where the TRP index may be an index of a BFD RS set, an index of a NBI set, an index of a BFR procedure, a value of the CORESETPoolIndex, an index of a subset of the CORESET, etc. When the terminal determines that BFR occurs in a TRP associated with TRP index 1, the spatial relationship corresponding to TRP index 2 is used to send the LRR; similarly, when the terminal determines that BFR occurs in a TRP associated with TRP index 2, the spatial relationship corresponding to TRP index 1 is used to send the LRR.

It should be noted that Step 4 is applicable to all embodiments in the present application, and this optional step may be executed after each SR resource determination method.

Embodiment 2 is as follows.

In order to enable a TRP or a cell to select an appropriate SR resource (in essence, an appropriate spatial relationship) when a beam failure recovery occurs, the LRR may be sent to a cell or a TRP that have not failed. The network device side may also explicitly configure a higher layer parameter, namely the TRP_list or the BFR_list, for indicating a set of cells or TRPs with similar BFR characteristics or similar spatial relationships, and establishing an association between the TRP_list or BFR_list and the SR resource. When the BFR occurs, the terminal may determine the list where the cell or TRP is located according to a TRP index (an index of a BFD RS set or an index of a NBI set, an index of a BFR procedure, a value of the CORESETPoolIndex) or a cell index having a transmission failure, and then select the SR resource associated with a corresponding list to send the LRR. Since the list is configured or indicated to the terminal by the network device side, the network device side may configure an appropriate SR resource for the terminal according to the actual deployment condition to ensure that the terminal sends the LRR to a cell or a TRP where no failure occurs.

Step 1: The network device configures N SR resources (N=1, 2, 3... , etc.) and K number of TRP_lists or BFR_lists for a cell group, each TRP_list or BFR_list is associated with one SR resource.

For example, each TRP_list includes a set of cells or TRPs with similar TCI states or similar spatial relationships:
TRP_list1: Component Carrier (CC) index p, CC index q, CC index r TRP 1, CC index s TRP 1...
TRP_list2: CC index o, CC index r TRP 2, CC index s TRP 2...

Each cell or index may only appear in one TRP_list.

For another example, each BFR_list includes a set of BFR procedures corresponding to a set of cells or TRPs with similar TCI states or similar spatial relationships (the BFR procedures may be numbered globally in the cell group):
BFR_list1: BFR procedure a, b, c, d...
BFR_list2: BFR procedure x, y, z...

Each BFR procedure may only appear in one BFR_list.

TRP_list and BFR_list may be further activated or updated using MAC-CE signaling or DCI signaling, in addition to being configured using RRC signaling, to adapt to real-time changes in transmission conditions. For example, a cell is configured with two TRPs (TPR1 and TRP2), and only one TRP is used for transmission each time (such as Dynamic Point Selection, DPS), and perform cell-level BFR, so it is configured on the TRP_list in the form of a cell, for example, CC index k, the cell may appear on TRP_list1 when using the TRP1 for communication (that is, CC index k appears on TRP_list1), and the cell may appear on TRP_list2 when using TRP for communication (that is, CC index k appears on TRP_list1). When medium access control-control element (MAC-CE) signaling or DCI signaling is used for further activation or update, it needs to be ensured that each cell or TRP can only appear on one list after update or activation, but when configured by RRC, one cell or TRP can appear on two lists. In addition, one cell can also perform BFR at different levels in different periods, for example, performing the cell-level BFR in a period of time and performing the TRP-level BFR in another period of time. Therefore, before using MAC-CE or DCI signaling to update, indexes corresponding to the TRP-level BFR and the cell-level BFR can both appear on the list, for example, CC index k appears on list 1, CC index k TRP 1 appears on list 2, and CC index k TRP 2 appears on list 3. When MAC-CE signaling or DCI signaling is used for activation or update, it may be updated in units of list (for example, list 1 is updated to list 2), and it may also be updated in units of cell on a list (for example, update CC index k on list 1 to CC index k TRP 2).

Step 2: when the terminal detects the BFR, the terminal determines the TRP_list or BFR_list where the cell or TRP having the beam failure is located, or where an index of BFR procedure is located according to the BFR procedure, an index of a BFD RS set, a CORESET higher layer parameter, i.e., CORESETPoolIndex, and an index of a subset of a CORESET, etc.

Step 3: The terminal determines the SR resource associated with the list according to the determined the cell or TRP, or the determined index of BFR procedure, and sends the LRR on the determined SR resource.

Embodiment 3 is as follows.

An association relationship between an SR resource and a BFD RS set may also be established, and the terminal may directly select a corresponding SR resource to send LRR after detecting that a certain BFD RS set has a failure.

Step 1: the network device configures an associated SR resource for each BFD RS set, and the quantity of associated SR resources of BFD RS sets of all cells in a cell group does not exceed N.

Specifically, in the configuration of each BFD RS set, an SR resource related identifier is added, which may be, for example, a scheduling request identifier (SchedulingRequestld). For example, one cell group includes four cells, and each cell has two BFD RS sets, totally eight BFD RS sets, and each set is configured with an associated SchedulingRequestld. For example, when N=3, the SchedulingRequestld configured for the two BFD RS sets in the cell 1 is 0 and 1, the SchedulingRequestld configured for the two BFD RS sets in the cell 2 is 1 and 2, the SchedulingRequestld configured for the BFD RS set in the cell 3 is 0 and 2, and the SchedulingRequestld configured for the BFD RS set in the cell 4 is 1 and 2. It can be seen that the values of SchedulingRequestld configured for all cells are values in the set {0, 1, 2}.

For another example, when N=2, cell 1 and cell 2 each have one BFD RS set, the SchedulingRequestld configured for the BFD RS sets in these two cells are 0 and 1 respectively; cell 3 and cell 4 have two BFD RS sets, the SchedulingRequestld configured for the two BFD RS sets in the two cells is 0 and 1 respectively. It can be seen that values of SchedulingRequestld configured for all cells are values in the set {0, 1}.

In this embodiment, the index of the BFD RS set may be numbered in a cell, or may be globally numbered in a cell group, which is not limited by the present disclosure. No matter which numbering method is adopted, it is only necessary to add the configuration of the SchedulingRequestld to the configuration of the BFD RS set.

Step 2: when the terminal detects that measurement values of all RSs in a BFD RS set are lower than a certain threshold, it is considered that a beam failure occurs in the cell or TRP corresponding to the BFD RS set, and the terminal sends an LRR on the SR resource associated with the BFD RS set.

For example, the measurement values of the RSs in the second BFD RS set in the cell 3 are all lower than the threshold, and the terminal sends the LRR to the base station on the SR resource with the SchedulingRequestld of 2.

In this embodiment, each SR resource is configured with a spatial relationship, for example, the spatial relationship of each SR resource points to one TRP or one cell, and the network device side may configure a suitable SR resource for each BFD RS set according to a deployment condition, so that the LRR can be sent to a suitable cell when a beam failure occurs. For example, when N=2, spatial relationships of two SR resources (SchedulingRequestld is configured as 0 and 1) points to a TRP2 and a TRP1 respectively. The network device side may associate a TRP1 of the cell 1 with the SR resource 0, and associate a TRP2 of the cell with the SR resource 1, so that when TRP1 fails, the terminal may use the SR resource 0 to send the LRR, that is, send the LRR to TRP2 (that is, there is no failed cell, and the channel quality is better). Thus, the transmission reliability of the LRR can be increased and the time delay for transmission failure recovery can be reduced.

In particular, this embodiment is applicable to the case where the BFD RS set is explicitly configured in the BFR procedure.

Embodiment 4 is as follows.

An association between a BFD RS set and an SR resource may also be established in a predefined manner. For example, the network device side may configure N SR resources for one cell group (for example, values of the SchedulingRequestld are 0, 1, ... , N-1), the association between the BFD RS set and the SR resource may be established by following predefined rules.

When N=2, if the index of the BFD RS set is numbered in each cell, each cell has at most K=2 BFD RS sets, the BFD RS set may be explicitly configured by the network device side, or determined by the terminal according to a predefined rule, which is not limited in the embodiments of the present application. The value of the BFD RS set is 0 or 1. The terminal may determine that the BFD RS set with the index k (k=0 or 1) and the SR resource with SchedulingRequestld k are associated. When the terminal detects that the measurement values of all the RSs in the BFD RS set k are lower than the threshold, the terminal sends the LRR to the base station on the SR resource with the SchedulingRequestld k. In particular, when the TRP-level BFR is performed in a cell, the quantity of BFD RS sets is two (with the index value of 0 or 1), and when the cell-level BFR is performed in a cell, the quantity of BFD RS set is one (with the index value of 0), the above predefined rule is applicable to both the cell-level BFR and the TRP-level BFR.

If the index of the BFD RS set is numbered in a cell group, the association between the BFD RS set and the SR resource can also be established in a modulo manner. Assuming that the index value of the BFD RS set is P, the SR resource for sending the LRR is mod (P, N) when a failure occurs in the BFD RS set .

When N=3, if the index of the BFD RS set is globally numbered in a cell group, the method is similar to that when N=2, that is, assuming that the index value of the BFD RS set is P, when a failure occurs in the BFD RS set, the SR resource for sending the LRR is mod (P, N).

If the index of the BFD RS set is numbered in each cell, each cell has at most K=2 BFD RS sets, the BFD RS set may be explicitly configured by the network device side, or determined by the terminal according to a predefined rule, which is not limited in the embodiments of the present application, and in either case, the value of the BFD RS set is 0 or 1.The terminal first determines the quantity of BFD RS sets in the cell, and if the quantity is 1, the BFD RS set is associated with one SR source (for example, the SR resource 0), and if the quantity is 2, the BFD RS sets are associated with the other two SR resources (for example, the SR resources 1 and 2). For a cell configured with 2 BFD RS sets, it may be determined that the BFD RS set with index k (k=0 or 1) and the SR resource with SchedulingRequestld n (n is 1 or 2) are associated. When the terminal detects that the measurement values of all the RSs in the BFD RS set k are lower than the threshold, the terminal sends the LRR to the base station on the SR resource with the SchedulingRequestld n.

In this way, by configuring the index of the BFD RS set, the network device side can ensure that an appropriate SR resource can be selected to send the LRR when a failure occurs in the BFD RS set, that is, the spatial relationship points to a TRP or a cell that does not fail.

In particular, this embodiment is applicable to the case of explicitly configuring the BFD RS set and implicitly determining the BFD RS set in the BFR procedure. In the implicit determination of the BFD RS set, the terminal may also determine at most two BFD RS sets for each cell (or BWP) according to the configuration of the CORESET (a high layer parameter CORESETPoolIndex or a subset of a CORESET configured explicitly).

Embodiment 5 is as follows.

An association relationship between a CORESET group and an SR resource may also be established in a predefined manner, for example, the CORESET group may be an implicit group determined according to a higher layer parameter CORESETPoolIndex, or may be a subset of a CORESET configured by a network device side. Each CORESET subset includes one or more indexes of CORESETs.

Step 1: the network device configures N SR resources (N = 1, 2, 3... , etc.) for a cell group, where the SR resource i is used for a beam failure case corresponding to the CORESET group i.

The CORESET group is an implicit group determined according to a higher layer parameter of the CORESET, i.e., CORESETPoollndex, or a group explicitly configured by a higher layer signaling. For example, a CORESET with a CORESETPoolIndex taking a value of 0 or without CORESETPoolIndex configured belongs to a CORESET group 0, and a CORESET with a CORESETpoollndex taking a value of 1 belongs to a CORESET group 1.

Or, a CORESET with a CORESETPoolIndex taking a value of 0 or without CORESETPoolIndex configured belongs to the CORESET group 0, a CORESET with a CORESETPoolIndex taking a value of 1 belongs to a CORESET group 1, and a group with a CORESETPoolIndex taking values of 0 and 1 belongs to a CORESET group 2 (for example, this configuration is applicable to the CORESET configuration when the PDCCH uses Single Frequency Network (SFN) transmission).

Or, a CORESET with a CORESETPoolIndex taking a value of 0 belongs to the CORESET group 0, a CORESET with a CORESETPoolIndex taking a value of 1 belongs to the CORESET group 1, and a CORESET without a CORESETPoolIndex configured belongs to the CORESET group 2. The group numbers corresponding to the above three types of CORESETs may also interact with each other, which is not limited in embodiments of the present application.

Or, a CORESET with a CORESETPoolIndex taking a value of 0 belongs to the CORESET group 0, a CORESET with a CORESETPoolIndex taking a value of 1 belongs to the CORESET group 1, and a CORESET with a CORESETPoolIndex taking a value of 2 belongs to the CORESET group 2 (for example, this configuration is applicable to the CORESET configuration when the PDCCH uses SFN transmission).

Or, the k-th CORESET subset configured by a higher layer parameter belongs to a CORESET group k. The network device configures one SR resource for each CORESET group. The quantity of CORESET groups is at most 3, and the quantity of SR resources is also at most 3.

Step 2: the terminal determines an associated SR resource according to a value of a CORESETPoolIndex of a CORESET group in which the beam failure occurs or an index of a subset of a CORESET, and sends the LRR on the SR resource.

In particular, if there are multiple CORESET groups where beam failure occurs, for example, two CORESET groups, the terminal may select SR resources corresponding to the two CORESET groups to send the LRR.

In other embodiments of the present application, if more than one list has a BFR condition, or more than one TRP or cell has a BFR condition, the terminal may send the LRR on all SR resources corresponding to the terminal.

This embodiment is applicable to the case where the BFD RS set is implicitly determined. When implicitly determining the BFD RS set, the terminal may directly determine the associated CORESET group according to the RS or BFD RS set in which the failure occurs, and then select a suitable SR resource to send the LRR.

Embodiment 6 is as follows.

SR resources may also be configured for each cell respectively, each SR resource corresponds to a resource for sending an LRR when the cell-level BFR or the TRP-level BFR occurs, and the quantity of SR resources configured for all cells does not exceed N.

Or, SR resources of each cell respectively represent a LRR transmission resource when the RS in the first BFD RS set has a failure and the LRR transmission resource when the RS in the second BFD RS set has a failure; when one SR resource is configured, it indicates the LRR transmission resource used when the RS in the first BFD RS set has a failure.

Or, SR resources of each cell correspond to the first TRP index and the second TRP index respectively. When one SR resource is configured, the SR resource is used for the first TRP index.

One benefit of this direct configuration of SR resources per cell is that it can be adapted to various deployments on the network device side. In particular, a cell performing the cell-level BFR may be substantially configured with a plurality of TRPs, and one TRP may be selected to work within a period of time. In this way, the network device side can configure the LRR transmission resource when a failure occurs in the cell according to the deployment situation.

Similar to other embodiments, the terminal may first determine the BFD RS set or TRP index where a failure occurred, and then determine the LRR transmission resource based on the association between the BFD RS set or TRP index and the SR resource. According to the methods in Embodiments 1 to 6, if there is more than one TRP or cell with a transmission failure, and the determined quantity of SR resources is greater than 1, the terminal transmits the LRR on more than one SR resource. In Embodiment 7, if there is more than one TRP or cell with a transmission failure, the terminal may first determine a cell (CC) or a TRP, and then transmit the LRR on the SR resource corresponding to the selected cell or TRP.

Embodiment 7 is as follows.

If a beam failure or a transmission failure occurs to a plurality of TRPs of a plurality of cells, for example, the beam failure or the transmission failure occurs to CC1 TRP2, CC2 TRP1, and CC3 TRP2, a default or predefined TRP index (or BFD RS set index) is determined first, and then select an SR resource corresponding to the default or predefined TRP index to send the LRR. The process of determining the corresponding SR resource according to the predefined TRP index refers to Embodiments 1-6. The default or predefined TRP index is determined by one of the following methods.

Method 1: a physical resource where the beam failure occurs is selected first according to an order of the CC index from small to large, and then according to an order of the TRP index from small to large, then the TRP2 where the beam failure occurs in the CC1 is selected, and then the SR resource corresponding to the TRP2 is selected as the finally determined SR resource to transmit an LRR.

Method 2: a physical resource where the beam failure occurs is selected first according to an order of the TRP index from small to large, and then according to an order of the CC index from small to large, then TRP1 in CC2 is select, and then the SR resource corresponding to TRP1 is selected as the finally determined SR resource to transmit an LRR.

Method 3: if the TRP index has a global number, one SR resource corresponding to the TRP with the largest or smallest TRP index may be selected as the finally determined SR resource only according to the TRP index. The global number means that all TRPs (or BFD RS sets) within the cell group are uniformly and consecutively numbered, for example, TRP indexes or BFD RS set indexes in CC1 are 0 and 1, the TRP index or BFD RS set index in CC2 is 2, and TRP indexes or BFD RS set indexes in CC3 are 3 and 4, and so on.

Optionally, the TRP index may be an index of a BFD RS set, an index of a subset or group of a CORESET, or a value of a CORESET higher layer parameter, i.e., CORESETPoollndex, an index of a BFR procedure, etc.

To sum up, in embodiments of the present application, a terminal selects an appropriate SR resource for a failed cell or TRP when BFR occurs according to an association relationship between an SR resource and a parameter related to the TRP or the cell, and the association relationship between the SR resource and the parameter related to the TRP or the cell is configured by a network device side or predefined. When the BFR occurs, the terminal may select an appropriate SR resource for the failed cell or TRP to send the LRR, that is, send the LRR to the cell or TRP that does not fail, so as to increase the transmission reliability of the LRR and reduce the time delay for transmission failure recovery.

At a terminal side, referring to Fig. 2, a resource determination method according to the embodiments of the present application includes following steps.

S101, determining a physical resource where a transmission failure occurs.

The transmission failure is, for example, a beam failure. The beam failure and transmission failure described in embodiments of the present application are equivalent.

The physical resource is, for example, a cell or a transmission point TRP. That is, this step, for example, determines that a beam failure occurs to the cell or TRP.

S102, determining a Scheduling Request (SR) resource for the physical resource where the transmission failure occurs, according to an association relationship between an SR resource and a parameter related to the physical resource configured by a network side or predefined.

The parameter related to the physical resource includes, such as the BFR level, the higher layer parameter list, the BFD RS set, the CORESETPoolIndex or the index of the subset CORESET described in the above Approach 1 to Approach 4 and in each embodiment.

Through the method, the terminal can determine a more appropriate SR resource for the physical resource with the transmission failure according to the association relationship, configured by the network side or predefined, between the SR resource and the parameter related to the physical resource. Therefore, when the BFR occurs, the terminal may select an appropriate SR resource for the failed cell or TRP (the physical resource where the transmission failure occurs) to send the LRR, and send the LRR to the non-failed cell or TRP, so as to increase the transmission reliability of the LRR and reduce the time delay for transmission failure recovery.

Optionally (corresponding to the above Approach 1), the SR resource for the physical resource is determined according to a predefined association relationship between the SR resource and a Beam Failure Recovery (BFR) level.

Optionally, determining the SR resource for the physical resource includes:
determining a BFR level corresponding to the physical resource according to a configuration of the network side or a predefined rule, in a condition that the transmission failure occurs to a group of physical resources; and determining an SR resource associated with the BFR level for the physical resource.

For example, when beam failure occurs in a certain cell, the BFR level of the cell may be determined according to the quantity of BFD RS sets. When one BFD RS set is configured or activated for the cell, it indicates that the cell-level BFR is performed in the cell, and when two BFD RS sets are configured or activated for the cell, it indicates that the TRP-level BFR is performed in the cell.

Optionally, the determining the SR resource associated with the BFR level for the physical resource includes:
determining an SR resource associated with a first level for the physical resource according to a predefined association relationship between the SR resource and the first level, in a condition that the determined BFR level is the first level; and
determining an SR resource associated with a second level for the physical resource according to a predefined association relationship between the SR resource and the second level, in a condition that the determined BFR level is the second level.

The first level is, for example, a cell level, and the second level is, for example, a TRP level.

Optionally, the determining the SR resource associated with the second level for the physical resource according to the predefined association relationship between the SR resource and the second level includes:
determining the SR resource for the physical resource according to an association relationship between the SR resource and a group of physical resource indexes.

For example, if it is determined that the BFR level of the physical resource where the beam failure is occurring currently is the cell level, the terminal may directly determine the corresponding SR resource; if it is determined that the BFR level of the physical resource where the beam failure is occurring currently is the TRP level, the terminal determines the corresponding SR resource according to a TRP index (i.e. indexes of a group of physical resource, such as an index of a BFD RS set or an index of a New candidate beam set (NBI) set, an index of a BFR procedure, a value of a CORESETPoolIndex, an index of a subset of a CORESET, etc.

Optionally, the determining the BFR level corresponding to the physical resource according to the configuration of the network side or the predefined rule includes at least one of follows.

1, a terminal determines that a BFR level of a cell is a first level, or a second level, or includes the first level and the second level, according to a parameter configured for the cell.

For example, the terminal determines the BFR level according to the quantity of BFD RS sets, and when one BFD RS set is configured or indicated for the cell, the terminal determines that the BFR level of the cell is the first level, and when two BFD RS sets are configured or indicated for the cell, the terminals determines that the BFR level of the cell is the second level.

2, the terminal determines the BFR level according to a quantity of values of CORESETPoolIndex configured by the network device side.

For example, when the quantity of values of the CORESETPoolIndex is 0 or 1, the terminal determines that the BFR level of the cell is the first level, and when the quantity of values of the CORESETPoolIndex is 2, the terminal determines that the BFR level of the cell is the second level.

3, the terminal determines the BFR level according to a quantity of CORESET subsets or a quantity of BFR procedures configured by the network device side.

For example, when the quantity of CORESET subsets or the quantity of BFR procedures is 1, the terminal determines that the BFR level of the cell is the first level; and when the quantity of CORESET subsets or the quantity of BFR procedures is 2, the terminal determines that the BFR level of the cell is the second level.

Optionally (corresponding to the above Approach 2), the SR resource for the physical resource is determined according to a predefined association relationship between the SR resource and a higher layer parameter list, where the higher layer parameter list includes a physical resource list or a Beam Failure Recovery (BFR) list.

It should be noted that the predefined in embodiments of the present application may be configured in advance by the network side, or may be determined according to a predefined rule.

Optionally, determining the SR resource for the physical resource includes:
determining a higher layer parameter list for the physical resource where the transmission failure occurs, or for an index of a BFR procedure, in a condition that a BFR is detected; and
determining a corresponding SR resource for the physical resource according to the determined higher layer parameter list.

For example, a plurality of SR resources and a plurality of TRP_lists or BFR_lists are configured for one cell group, and each TRP_list or BFR_list is associated with one SR resource.

When the BFR is detected, the TRP_list or BFR_list where the index of the BFR procedure is located is determined according to the index of the BFR procedure, and then the corresponding SR resource is determined.

Optionally (corresponding to the above Approach 3), the SR resource for the physical resource is determined according to a predefined association relationship between the SR resource and a BFD RS set.

Optionally, the determining the SR resource for the physical resource includes:
determining an SR resource associated with a BFD RS set for the physical resource, in a condition that measurement values of all BFD RSs in the BFD RS set are lower than a predefined threshold.

Optionally (corresponding to the above Approach 4), the SR resource for the physical resource is determined according to a predefined association relationship between the SR resource and a CORESETPoolIndex or an index of a subset of a CORESET configured by a higher layer.

Optionally, the determining the SR resource for the physical resource (for example, the case described in Embodiment 5 above) includes:
determining a corresponding SR resource for the physical resource according to a value of a CORESETPoolIndex of a CORESET group or an index of a subset of CORESET in which the transmission failure occurs.

Optionally, an SR resource i determined by a terminal is used for a CORESET group i in which the transmission failure occurs, where:
a CORESET with a CORESETPoolIndex taking a value of 0 or without a CORESETPoolIndex configured belongs to a CORESET group 0, and a CORESET with a CORESETPoolIndex taking a value of 1 belongs to a CORESET group 1; or
a CORESET with a CORESETPoolIndex taking a value of 0 or without a CORESETPoolIndex configured belongs to a CORESET group 0, a CORESET with a CORESETPoolIndex taking a value of 1 belongs to a CORESET group 1, and a group with CORESETPoolIndexs taking values of 0 and 1 belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET without a CORESETPoolIndex configured belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET with a CORESETPoolIndex taking a value of 2 belongs to a CORESET group 2; or
the k-th CORESET subset configured by a higher layer parameter belongs to a CORESET group k.

Optionally, the SR resource for the physical resource is determined according to an association relationship between the SR resource and an index of a BFR procedure configured by the network device side.

Optionally, the determining the SR resource for the physical resource includes:
determining the SR resource associated with the index of the BFR procedure for the physical resource, in a condition that the transmission failure of the physical resource corresponding to the index of the BFR procedure is detected.

Optionally, when the SR resource determined for the physical resource has a plurality of activated spatial relationships, the method further includes:
selecting, from the plurality of activated spatial relationships, a spatial relationship associated with an index of a physical resource where no transmission failure occurs to send a Link Recovery Request (LRR).

Optionally, the index of the physical resource includes one or more of: an index of a BFD RS set, or an index of a NBI set, an index of a BFR procedure, a value of a CORESETPoolIndex, and an index of a subset of a CORESET.

Optionally (corresponding to the above Embodiment 7), the physical resource where the transmission failure occurs includes a group of physical resources determined from one or more groups of physical resources where the transmission failure occurs, and in the S102, the SR resource is determined according to the determined group of physical resources.

Optionally, the group of physical resources is determined from the one or more groups of physical resources where the transmission failure occurs according to at least one of:
an index of a Component Carrier (CC) of the physical resource where the transmission failure occurs;
an index of a physical resource where the transmission failure occurs; or
an index of a BFD RS set where the transmission failure occurs.

Examples are as follows.

Method 1: a TRP and a corresponding SR resource are selected according to an order of a CC index first, and then according to an order of a TRP index.

Method 2: a TRP and the corresponding SR resource are selected according to an order of a TRP index first, and then according to an order of a CC index.

Method 3: if the TRP index has a global number, a TRP and the corresponding SR resource can be determined only according to an order of a TRP index.

When a SR resource is selected according to the order of the TRP index, the SR resource may be selected according to an ascending (from small to large)/descending (from large to small) order of the TRP index, or according to a priority (a configured or predefined priority) of the TRP.

When the SR resource is selected according to the order of the CC index, the SR resource may be selected according to an ascending (from small to large)/descending (from large to small) order of the CC index, or according to a priority (a configured or predefined priority) of the CC. According to the priority order of the CC, it may be the priority configured by the device at the network side, for example, the configured priority order from high to low is 5 CCs (that is, cells) with CC indexes of 0, 3, 4, 2, and 1. The priority order may also be determined by the terminal according to a predefined rule, for example, the PCell or PSCell has a higher priority, the SCell has a lower priority, or the CC with a smaller CC index value has a higher priority.

The TRP index may be an index of a BFD RS set, a value of a CORESETPoolIndex, an index of a group or subset of the configured CORESET, an index of a BFR procedure, etc. The index of the physical resource is equivalent to the TRP index. One group of physical resources corresponds to one TRP.

At a network side, referring to Fig. 3, a resource determination method according to the embodiments of the present application includes following steps.

S201, configuring an association relationship between an SR resource and a parameter related to a physical resource; where the physical resource is a cell or a Transmission Reception Point (TRP) where a transmission failure occurs.

S202, notifying a terminal of the association relationship for the terminal to determine an SR resource for the physical resource according to the association relationship.

Optionally, the parameter related to the physical resource includes:
a Beam failure Recovery (BFR) level; or,
a higher layer parameter list; or,
a Beam Failure Detection Reference Signal (BFD RS) set; or,
a CORESETPoolIndex or an index of a subset of a CORESET.

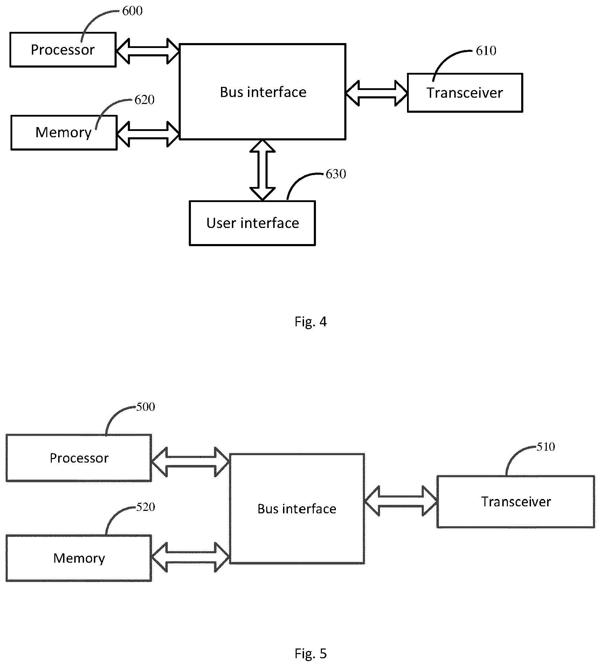

At a terminal side, referring to Fig. 4, a resource determination apparatus according to the embodiments of the present application includes:
a memory 620 configured to store program instructions;
a processor 600 configured to invoke the program instructions stored in the memory and perform in accordance with an obtained program:
   determining a physical resource where a transmission failure occurs; and
   determining a Scheduling Request (SR) resource for the physical resource where the transmission failure occurs, according to an association relationship between the SR resource and a parameter related to the physical resource, where the association relationship between the SR resource and the parameter related to the physical resource is configured by a network side or predefined.

Optionally, the SR resource for the physical resource is determined according to a predefined association relationship between the SR resource and a Beam Failure Recovery (BFR) level.

Optionally, the determining the SR resource for the physical resource includes:
determining a BFR level corresponding to the physical resource according to a configuration of the network side or a predefined rule, in a condition that the transmission failure occurs to a group of physical resources; and determining an SR resource associated with the BFR level for the physical resource.

Optionally, the determining the SR resource associated with the BFR level for the physical resource includes:
determining an SR resource associated with a first level for the physical resource according to a predefined association relationship between the SR resource and the first level, in a condition that the determined BFR level is the first level; and
determining an SR resource associated with a second level for the physical resource according to a predefined association relationship between the SR resource and the second level, in a condition that the determined BFR level is the second level.

Optionally, the determining the SR resource associated with the second level for the physical resource according to the predefined association relationship between the SR resource and the second level includes:
determining the SR resource for the physical resource according to an association relationship between the SR resource and a group of physical resource indexes.

Optionally, the determining the BFR level corresponding to the physical resource according to the configuration of the network side or the predefined rule includes at least one of:
determining, by a terminal, that a BFR level of a cell is a first level, or a second level, or includes the first level and the second level, according to a parameter configured for the cell, where the terminal determines the BFR level according to a quantity of BFD RS sets, and the terminal determines that the BFR level of the cell is the first level in a condition that one BFD RS set is configured or activated for the cell; the terminal determines that the BFR level of the cell is the second level in a condition that two BFD RS sets are configured or activated for the cell;
determining, by the terminal, the BFR level according to a quantity of values of a CORESETPoolIndex configured by the network device side, where the terminal determines that the BFR level of the cell is the first level in a condition that the quantity of values of the CORESETPoolIndex is 0 or 1; the terminal determines that the BFR level of the cell is the second level in a condition that the quantity of values of the CORESETPoolIndex is 2; or
determining, by the terminal, the BFR level according to a quantity of CORESET subsets or a quantity of BFR procedures configured by the network device side, where the terminal determines that the BFR level of the cell is the first level in a condition that the quantity of CORESET subsets or the quantity of BFR procedures is 1; the terminal determines that the BFR level of the cell is the second level in a condition that the quantity of CORESET subsets or the quantity of BFR procedures is 2.

Optionally, the SR resource for the physical resource is determined according to a predefined association relationship between the SR resource and a higher layer parameter list, where the higher layer parameter list includes a physical resource list or a BFR list.

Optionally, the determining the SR resource for the physical resource includes:
determining a higher layer parameter list for the physical resource where the transmission failure occurs, or for an index of a BFR procedure, in a condition that a BFR is detected; and
determining a corresponding SR resource for the physical resource according to the determined higher layer parameter list.

Optionally, the SR resource for the physical resource is determined according to a predefined association relationship between the SR resource and a BFD RS set.

Optionally, the determining the SR resource for the physical resource includes:
determining an SR resource associated with a BFD RS set for the physical resource, in a condition that measurement values of all BFD RSs in the BFD RS set are lower than a predefined threshold.

Optionally, the SR resource for the physical resource is determined according to a predefined association relationship between the SR resource and a CORESETPoolIndex or an index of a subset of a CORESETconfigured by a higher layer.

Optionally, the determining the SR resource for the physical resource includes:
determining a corresponding SR resource for the physical resource according to a value of a CORESETPoolIndex of a CORESET group or an index of a subset of a CORESET in which the transmission failure occurs.

Optionally, an SR resource i determined by a terminal is used for a CORESET group i in which the transmission failure occurs, where
a CORESET with a CORESETPoolIndex taking a value of 0 or without a CORESETPoolIndex configured belongs to a CORESET group 0, and a CORESET with a CORESETPoolIndex taking a value of 1 belongs to a CORESET group 1; or
a CORESET with a CORESETPoolIndex taking a value of 0 or without CORESETPoolIndex configured belongs to a CORESET group 0, a CORESET with a CORESETPoolIndex taking a value of 1 belongs to a CORESET group 1, and a group with CORESETPoolIndexs taking values of 0 and 1 belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET without a CORESETPoolIndex configured belongs to a CORESET group 2; or
a CORESET with a of CORESETPoolIndex taking values of 0 belongs to a CORESET group 0, a CORESET with a CORESETPoolIndex taking a value of 1 belongs to a CORESET group 1, and a CORESET with a CORESETPoolIndex taking a value of 2 belongs to a CORESET group 2; or
the k-th CORESET subset configured by a higher layer parameter belongs to a CORESET group k.

Optionally, the SR resource for the physical resource is determined according to an association relationship between the SR resource and an index of a BFR procedure configured by the network device side.

Optionally, the determining the SR resource for the physical resource includes:
determining the SR resource associated with the index of the BFR procedure for the physical resource, in a condition that the transmission failure of the physical resource corresponding to the index of the BFR procedure is detected.

Optionally, when the SR resource determined for the physical resource has a plurality of activated spatial relationships, the processor 600 is further configured to:
select, from the plurality of activated spatial relationships, a spatial relationship associated with an index of a physical resource where no transmission failure occurs to send a Link Recovery Request (LRR).

Optionally, the index of the physical resource includes one or more of: an index of a BFD RS set, or an index of a NBI set, an index of a BFR procedure, a value of a CORESETPoolIndex, and an index of a subset CORESET.

Optionally, the physical resource where the transmission failure occurs includes a group of physical resources determined from one or more groups of physical resources where the transmission failure occurs, and the SR resource is determined according to the determined group of physical resources.

Optionally, the group of physical resources is determined from the one or more groups of physical resources where the transmission failure occurs according to at least one of:
an index of Component Carrier (CC) of the physical resource where the transmission failure occurs;
an index of a physical resource where the transmission failure occurs; or
an index of a BFD RS set where the transmission failure occurs.

Optionally, the processor is configured to determine the SR resource according to a PCell or PSCell.

Optionally, the processor is further configured to:
send a Link Recovery Request (LRR) to a network side device on the determined SR resource.

A transceiver 610 is configured to receive and send data under control of the processor 600.

Here, in FIG. 4, the bus architecture may include any quantities of interconnected buses and bridges, all of which are specifically linked together through various circuits of one or more processors represented by the processor 600 and the memory represented by the memory 620. The bus architecture may further link various other circuits such as a peripheral device, a voltage regulator and a power management circuit. These circuits are all well known in the art and thus will not be further described again herein. The bus interface provides an interface. The transceiver 610 may be a plurality of elements, i.e., include a transmitter and a receiver, and provide units for communicating with various other devices over the transmission media. For different user devices, the user interface 630 may also be an interface capable of connecting external and internal required devices, including but not limited to a keypad, a display, a speaker, a microphone, a joystick, and the like.

The processor 600 is responsible for managing the bus architecture and general processing, and the memory 620 may store data used by the processor 600 when performing operations.

Optionally, the processor 600 may be a Central Processing Unit (CPU), an Application Specific Integrated Circuit (ASIC), a Field Programmable Gate Array (FPGA) or a Complex Programmable Logic Device (CPLD).

At a network side, referring to Fig. 5, a resource determination apparatus according to an embodiment of the present application includes:
a memory 520 configured to store program instructions; and
a processor 500 configured to invoke the program instructions stored in the memory and perform in accordance with an obtained program:
   configuring an association relationship between an SR resource and a parameter related to a physical resource; where the physical resource is a cell or a Transmission Reception Point (TRP) where a transmission failure occurs; and
   notifying a terminal of the association relationship for the terminal to determine an SR resource for the physical resource according to the association relationship.

Optionally, the parameter related to the physical resource includes:
a Beam failure Recovery (BFR) level; or,
a higher layer parameter list; or,
a Beam Failure Detection Reference Signal (BFD RS) set; or,
a CORESETPoolIndex or an index of a subset of a CORESET.

A transceiver 510 is configured to receive and send data under control of the processor 500.

Here, in FIG. 5, the bus architecture may include any quantities of interconnected buses and bridges, all of which are specifically linked together through various circuits of one or more processors represented by the processor 500 and the memory represented by the memory 520. The bus architecture may further link various other circuits such as a peripheral device, a voltage regulator and a power management circuit. These circuits are all well known in the art and thus will not be further described again herein. The bus interface provides an interface. The transceiver 510 may be a plurality of elements, i.e., include a transmitter and a receiver, and provide units for communicating with various other devices over the transmission media. The processor 500 is responsible for managing the bus architecture and general processing, and the memory 520 may store data used by the processor 500 when performing operations.

The processor 500 may be a Central Processing Unit (CPU), an Application Specific Integrated Circuit (ASIC), a Field Programmable Gate Array (FPGA) or a Complex Programmable Logic Device (CPLD).

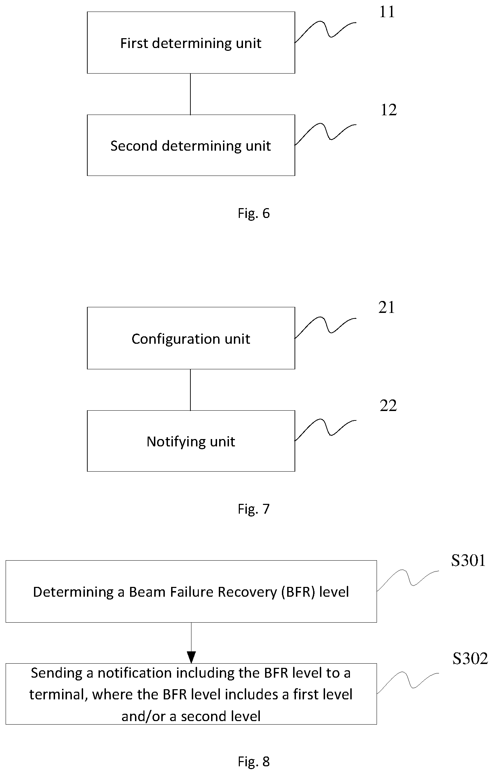

At a terminal side, referring to Fig. 6, a resource determination apparatus according to the embodiments of the present application includes:
a first determination unit 11, configured to determine a physical resource where a transmission failure occurs; and
a second determination unit 12, configured to determine a Scheduling Request (SR) resource for the physical resource where the transmission failure occurs, according to an association relationship between the SR resource and a parameter related to the physical resource, where the association relationship between the SR resource and the parameter related to the physical resource is configured by a network side or predefined.

The second determining unit 12 may also have the function of performing various processes described in the method at the terminal side, which will not be described here.

At a network side, referring to Fig. 7, a resource determination apparatus according to the embodiments of the present application includes:
a configuration unit 21, configured to configure an association relationship between an SR resource and a parameter related to a physical resource; where the physical resource is a cell or a Transmission Reception Point (TRP) where a transmission failure occurs;
a notifying unit 22, configured to notify a terminal of the association relationship for the terminal to determine an SR resource for the physical resource according to the association relationship.

The parameter related to the physical resource includes:
a Beam failure Recovery (BFR) level; or,
a higher layer parameter list; or,
a Beam Failure Detection Reference Signal (BFD RS) set; or,
a CORESETPoolIndex or an index of a subset of a CORESET.

At a network side, referring to Fig. 8, an information communication method according to an embodiment of the present application includes following steps.

S301, determining a Beam Failure Recovery (BFR) level.

S302, sending a notification including the BFR level to a terminal, where the BFR level includes a first level and/or a second level.

Optionally, the notification further includes information about a BFD RS set.

At a terminal side, referring to Fig. 8, an information communication method according to an embodiment of the present application includes following steps.

S401, acquiring a notification including a Beam Failure Recovery (BFR) level sent by a network side.

S402, acquiring the BFR level from the notification.

Optionally, the method further includes: acquiring information about a BFD RS set from the notification.

Optionally, the method further includes:
determining information about a BFD RS set according to the BFR level.

At a network side, an information communication apparatus (the structural drawing may be the same as Fig. 5) according to an embodiment of the present application includes:
a memory configured to store program instructions;
a processor configured to invoke the program instructions stored in the memory and perform in accordance with an obtained program:
   sending a notification including a Beam Failure Recovery (BFR) level to a terminal, where the BFR level includes a first level and/or a second level.

Optionally, the notification further includes information about a Beam Failure Detection Reference Signal set (BFD RS set).

At a terminal side, an information communication apparatus (the structural drawing may be the same as Fig. 4) according to an embodiment of the present application includes:
a memory configured to store program instructions;
a processor configured to invoke the program instructions stored in the memory and perform in accordance with an obtained program:
   acquiring a notification including a Beam Failure Recovery (BFR) level sent by a network side; and
   acquiring the BFR level from the notification.

Optionally, the processor is further configured to invoke the program instructions stored in the memory and perform in accordance with the obtained program:
acquiring information about a BFD RS set from the notification.

Optionally, the processor is further configured to invoke the program instructions stored in the memory and perform in accordance with the obtained program:
determining information about a BFD RS set according to the BFR level.

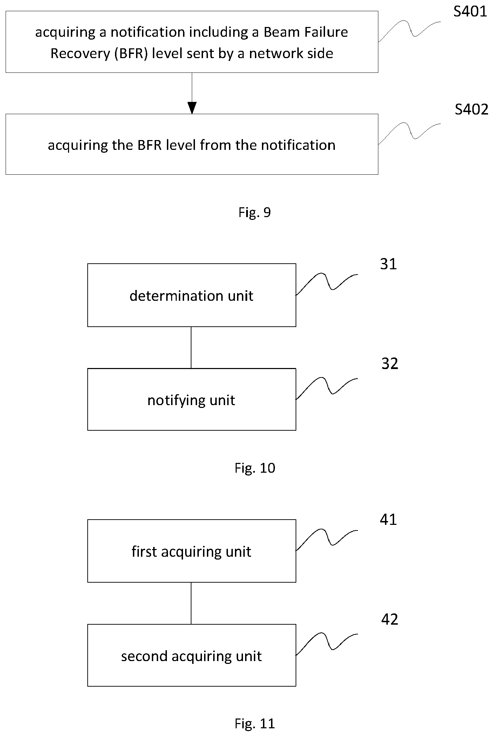

At a network side, referring to Fig. 10, an information communication apparatus according to an embodiment of the present application includes:
a determination unit 31, configured to determine a Beam Failure Recovery (BFR) level; and
a notifying unit 32, configured to send a notification including the BFR level to a terminal, where the BFR level includes a first level and/or a second level.

Optionally, the notification further includes information about a BFD RS set.

At a terminal side, referring to Fig. 11, an information communication apparatus according to an embodiment of the present application includes:
a first acquiring unit 41, configured to acquire a notification including a Beam Failure Recovery (BFR) level sent by a network side; and
a second acquiring unit 42, configured to acquire the BFR level from the notification.

Optionally, the second acquiring unit 42 is further configured to:
acquiring information about a BFD RS set from the notification.

Optionally, the second acquiring unit 42 is further configured to:
determining information about a BFD RS set according to the BFR level.

It should be noted that the division of units in embodiments of the present application is illustrative, and is merely a kind of logical function division, and there may be other division methods in actual implementations. In addition, the functional units in each embodiment of the present application may be integrated into one processing unit, or each unit may exist alone physically, or two or more units may be integrated into one unit. The above-mentioned integrated units may be implemented in the form of hardware, or may be implemented in the form of software functional units.

When the integrated unit is implemented in the form of software functional unit and sold or used as an independent product, it may be stored in a computer readable storage medium. Based on such understanding, the technical solution of the present application essentially or a part that contributes to the prior art or all or a part of the technical solution may be embodied in the form of software product. The computer software product is stored in a storage medium, and includes several instructions used to enable a computer device (may be a personal computer, a server, or a network device, etc.) or a processor to perform all or some of the steps of the methods of various embodiments of the present application. The above-mentioned storage medium includes: USB flash drive, mobile hard disk, Read-Only Memory (ROM), Random Access Memory (RAM), magnetic disk or compact disc or various media that can store the program codes.

The embodiments of the present application provide a computing device, where the computing device may be a desktop computer, a portable computer, a smart phone, a tablet computer, a Personal Digital Assistant (PDA) or the like. The computing device may include a Center Processing Unit (CPU), a memory, input/output devices and the like. The input device may include a keyboard, a mouse, a touch screen and the like, and the output device may include a display device such as Liquid Crystal Display (LCD), Cathode Ray Tube (CRT) or the like.

The memory may include a Read-Only Memory (ROM) and a Random Access Memory (RAM), and provide the program instructions and data stored in the memory to the processor. In the embodiments of the present application, the memory may be used to store the program of any one of the methods according to embodiments of the present application.

The processor invokes the program instructions stored in the memory and is configured to perform any one of the methods according to embodiments of the present application in accordance with the obtained program instructions.

The embodiments of the present application provide a computer storage medium for storing computer program instructions used by apparatuses according to embodiments of the present application described above, where the computer storage medium includes the program for performing any one of the methods according to embodiments of the present application described above.

The computer storage medium may be any available media or data storage device accessible to the computer, including but not limited to magnetic memory (e.g., floppy disk, hard disk, magnetic tape, Magnetic Optical disc (MO) or the like), optical memory (e.g., CD, DVD, BD, HVD or the like), semiconductor memory (e.g., ROM, EPROM, EEPROM, nonvolatile memory (NAND FLASH), Solid State Disk (SSD)) or the like.

The methods according to embodiments of the present application can be applied to a terminal device, and can also be applied to network device.

The terminal device is also called a User Equipment (UE), a Mobile Station (MS), a Mobile Terminal (MT), etc. Optionally, the terminal may be capable of communicating with one or more core networks via a Radio Access Network (RAN), for example, the terminal may be a mobile telephone (otherwise known as a "cellular" telephone), or a computer of a mobile nature, etc. The terminal may also be, for example, a portable mobile device, a pocket-sized mobile device, a hand-held mobile device, a computer-embedded mobile device or a vehicle-mounted mobile device.

The network device may be a base station (e.g., an access point), which refers to a device in an access network that communicates over the air-interface, through one or more sectors, with wireless terminals. The base station may be configured to convert received air frames to and from IP packets, acting as a router between the wireless terminal and the rest of the access network, which may include an Internet Protocol (IP) network. The base station may also coordinate attribute management for the air interface. For example, the base station may be a Base Transceiver Station (BTS) in GSM or CDMA, a base station (NodeB) in WCDMA, or an evolved base station (NodeB or eNB or e-NodeB, an evolutional Node B), or a gNB in a 5G system, or the like. Embodiments of the present application are not limited.

The processing flows of the above methods may be implemented by a software program, and this software program may be stored in a storage medium. When the stored software program is invoked, the above method steps are performed.

It should be understood by those skilled in the art that embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, optical memories and the like) containing computer usable program codes therein.

The present application is described by reference to the flow charts and/or the block diagrams of the methods, the devices (systems) and the computer program products according to embodiments of the present application. It should be understood that each process and/or block in the flow charts and/or the block diagrams, and a combination of processes and/or blocks in the flow charts and/or the block diagrams may be implemented by the computer program instructions. These computer program instructions may be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory capable of guiding the computer or another programmable data processing device to operate in a particular way, so that the instructions stored in the computer readable memory produce a manufacture including an instruction apparatus, where the instruction apparatus implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the present application without departing from the spirit and scope of the present application. Thus the present application is also intended to encompass these modifications and variations therein as long as these modifications and variations to the present application come into the scope of the claims of the present application and their equivalents.

## Claims

1. A resource determination method, comprising:
determining a physical resource where a transmission failure occurs; and
determining a Scheduling Request, SR, resource for the physical resource where the transmission failure occurs, according to an association relationship between the SR resource and a parameter related to the physical resource, wherein the association relationship between the SR resource and the parameter related to the physical resource is configured by a network side or predefined.

2. The method according to claim 1, wherein the SR resource for the physical resource is determined according to a predefined association relationship between the SR resource and a Beam Failure Recovery, BFR, level.

3. The method according to claim 2, wherein the determining the SR resource for the physical resource comprises:
determining a BFR level corresponding to the physical resource according to a configuration of the network side or a predefined rule, in a condition that the transmission failure occurs to a group of physical resources; and determining an SR resource associated with the BFR level for the physical resource.

4. The method according to claim 3, wherein the determining the SR resource associated with the BFR level for the physical resource comprises:
determining an SR resource associated with a first level for the physical resource according to a predefined association relationship between the SR resource and the first level, in a condition that the determined BFR level is the first level; and
determining an SR resource associated with a second level for the physical resource according to a predefined association relationship between the SR resource and the second level, in a condition that the determined BFR level is the second level.

5. The method according to claim 4, wherein the determining the SR resource associated with the second level for the physical resource according to the predefined association relationship between the SR resource and the second level comprises:
determining the SR resource for the physical resource according to an association relationship between the SR resource and a group of physical resource indexes.

6. The method according to claim 3, wherein the determining the BFR level corresponding to the physical resource according to the configuration of the network side or the predefined rule comprises at least one of:
determining, by a terminal, that a BFR level of a cell is a first level, or a second level, or comprises the first level and the second level according to a parameter configured for the cell, wherein the terminal determines the BFR level according to a quantity of Beam Failure Detection Reference Signal, BFD RS, sets, and the terminal determines that the BFR level of the cell is the first level in a condition that one BFD RS set is configured or activated for the cell; and the terminal determines that the BFR level of the cell is the second level in a condition that two BFD RS sets are configured or activated for the cell;
determining, by the terminal, the BFR level according to a quantity of values of a CORESETPoolIndex configured by the network device side, wherein the terminal determines that the BFR level of the cell is the first level in a condition that the quantity of values of the CORESETPoolIndex is 0 or 1; and the terminal determines that the BFR level of the cell is the second level in a condition that the quantity of values of the CORESETPoolIndex is 2; or
determining, by the terminal, the BFR level according to a quantity of CORESET subsets or a quantity of BFR procedures configured by the network device side, wherein the terminal determines that the BFR level of the cell is the first level in a condition that the quantity of CORESET subsets or the quantity of BFR procedures is 1; and the terminal determines that the BFR level of the cell is the second level in a condition that the quantity of CORESET subsets or the quantity of BFR procedures is 2.

7. The method according to claim 1, wherein the SR resource for the physical resource is determined according to a predefined association relationship between the SR resource and a higher layer parameter list, wherein the higher layer parameter list comprises a physical resource list or a BFR list.

8. The method according to claim 7, wherein the determining the SR resource for the physical resource comprises:
determining a higher layer parameter list for the physical resource where the transmission failure occurs, or for an index of a BFR procedure, in a condition that a BFR is detected; and
determining a corresponding SR resource for the physical resource according to the determined higher layer parameter list.

9. The method according to claim 1, wherein the SR resource for the physical resource is determined according to a predefined association relationship between the SR resource and a BFD RS set.

10. The method according to claim 9, wherein the determining the SR resource for the physical resource comprises:
determining an SR resource associated with a BFD RS set for the physical resource, in a condition that measurement values of all BFD RSs in the BFD RS set are lower than a predefined threshold.

11. The method according to claim 1, wherein the SR resource for the physical resource is determined according to a predefined association relationship between the SR resource and a CORESETPoolIndex, or an index of a subset of a control resource set, CORESET, configured by a higher layer.

12. The method according to claim 11, wherein the determining the SR resource for the physical resource comprises:
determining a corresponding SR resource for the physical resource according to a value of a CORESETPoolIndex of a CORESET group or an index of a subset of a CORESET in which the transmission failure occurs.

13. The method according to claim 12, wherein an SR resource i determined by a terminal is used for a CORESET group i in which the transmission failure occurs, wherein
a CORESET with a CORESETPoolIndex taking a value of 0 or without a CORESETPoolIndex configured belongs to a CORESET group 0, and a CORESET with a CORESETPoolIndex taking a value of 1 belongs to a CORESET group 1; or
a CORESET with a CORESETPoolIndex taking a value of 0 or without a CORESETPoolIndex configured belongs to a CORESET group 0, a CORESET with a CORESETPoolIndex taking a value of 1 belongs to a CORESET group 1, and a group with CORESETPoolIndexs taking values of 0 and 1 belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET without a CORESETPoolIndex configured belongs to a CORESET group 2; or
a CORESET with a CORESETPoolIndex taking a value of 0 belongs to a CORESET group 0, a CORESET with a CORESETPoolIndex taking a value of 1 belongs to a CORESET group 1, and a CORESET with a CORESETPoolIndex taking a value of 2 belongs to a CORESET group 2; or
the k-th CORESET subset configured by a higher layer parameter belongs to a CORESET group k.

14. The method according to claim 1, wherein the SR resource for the physical resource is determined according to an association relationship between the SR resource and an index of a BFR procedure configured by the network device side.

15. The method according to claim 14, wherein the determining the SR resource for the physical resource comprises:
determining the SR resource associated with the index of the BFR procedure for the physical resource, in a condition that the transmission failure of the physical resource corresponding to the index of the BFR procedure is detected.

16. The method according to claim 1, when the SR resource determined for the physical resource has a plurality of activated spatial relationships, the method further comprises:
selecting, from the plurality of activated spatial relationships, a spatial relationship associated with an index of a physical resource where no transmission failure occurs to send a Link Recovery Request, LRR.

17. The method according to claim 16, wherein the index of the physical resource comprises one or more of: an index of a BFD RS set, or an index of a New Candidate Beam set, NBI set, an index of a BFR procedure, a value of a CORESETPoolIndex, and an index of a subset of a CORESET.

18. The method according to claim 1, wherein the physical resource where the transmission failure occurs comprises a group of physical resources determined from one or more groups of physical resources where the transmission failure occurs, and the SR resource is determined according to the determined group of physical resources.

19. The method according to claim 18, wherein the group of physical resources is determined from the one or more groups of physical resources where the transmission failure occurs according to at least one of:
an index of Component Carrier, CC, of the physical resource where the transmission failure occurs;
an index of a physical resource where the transmission failure occurs; or
an index of a BFD RS set where the transmission failure occurs.

20. The method according to claim 18, wherein the determining the SR resource according to the determined group of physical resources comprises:
determining the SR resource according to a Primary Cell, PCell, or a Primary Secondary Cell Group Cell, PSCell.

21. The method according to claim 1, further comprising:
sending a Link Recovery Request, LRR, to a network side device on the determined SR resource.

22. A resource determination method, comprising:
configuring an association relationship between an SR resource and a parameter related to a physical resource; wherein the physical resource is a cell or a Transmission Reception Point, TRP, where a transmission failure occurs; and
notifying a terminal of the association relationship for the terminal to determine an SR resource for the physical resource according to the association relationship.

23. The method according to claim 22, wherein the parameter related to the physical resource comprises:
a Beam failure Recovery, BFR, level; or,
a higher layer parameter list; or,
a Beam Failure Detection Reference Signal, BFD RS, set; or,
a CORESETPoolIndex, or an index of a subset of a control resource set, CORESET.

24. An information communication method, comprising:
sending a notification comprising a Beam Failure Recovery, BFR, level to a terminal, wherein the BFR level comprises a first level and/or a second level.

25. The method according to claim 24, wherein the notification further comprises information about a Beam Failure Detection Reference Signal, BFD RS, set.

26. An information communication method, comprising:
acquiring a notification comprising a Beam Failure Recovery, BFR, level sent by a network side; and
acquiring the BFR level from the notification.

27. The method according to claim 26, wherein the method further comprises: acquiring information about a Beam Failure Detection Reference Signal, BFD RS, set, from the notification.

28. The method according to claim 26, wherein the method further comprises:
determining information about a BFD RS set, according to the BFR level.

29. A resource determination apparatus, comprising:
a memory configured to store program instructions; and
a processor configured to invoke the program instructions stored in the memory and perform in accordance with an obtained program:
determining a physical resource where a transmission failure occurs; and
determining a Scheduling Request, SR, resource for the physical resource where the transmission failure occurs, according to an association relationship between the SR resource and a parameter related to the physical resource, wherein the association relationship between the SR resource and the parameter related to the physical resource is configured by a network side or predefined.

30. The apparatus according to claim 29, wherein the SR resource for the physical resource is determined according to a predefined association relationship between the SR resource and a Beam Failure Recovery, BFR, level.

31. The apparatus according to claim 29, wherein the SR resource for the physical resource is determined according to a predefined association relationship between the SR resource and a higher layer parameter list, wherein the higher layer parameter list comprises a physical resource list or a BFR list.

32. The apparatus according to claim 29, wherein the SR resource for the physical resource is determined according to a predefined association relationship between the SR resource and a Beam Failure Detection Reference Signal, BFD RS, set.

33. The apparatus according to claim 29, wherein the SR resource for the physical resource is determined according to a predefined association relationship between the SR resource and a CORESETPoolIndex, or an index of a subset of a control resource set, CORESET, configured by a higher layer.

34. The apparatus according to claim 29, wherein the SR resource for the physical resource is determined according to an association relationship between the SR resource and an index of a BFR procedure configured by the network device side.

35. The apparatus according to claim 29, when the SR resource determined for the physical resource has a plurality of activated spatial relationships, the processor is further configured to:
select, from the plurality of activated spatial relationships, a spatial relationship associated with an index of a physical resource where no transmission failure occurs to send a Link Recovery Request, LRR.

36. The apparatus according to claim 29, wherein the physical resource where the transmission failure occurs comprises a group of physical resources determined from one or more groups of physical resources where the transmission failure occurs, and the SR resource is determined according to the determined group of physical resources.

37. The apparatus according to claim 36, wherein the group of physical resources is determined from the one or more groups of physical resources where the transmission failure occurs according to at least one of:
an index of Component Carrier, CC, of the physical resource where the transmission failure occurs;
an index of a physical resource where the transmission failure occurs; or
an index of a BFD RS set where the transmission failure occurs.

38. The apparatus according to claim 36, wherein the processor is configured to determine the SR resource according to a Primary Cell, PCell, or a Primary Secondary Cell Group Cell, PSCell.

39. The apparatus according to claim 29, wherein the processor is further configured to:
send a Link Recovery Request, LRR, to a network side device on the determined SR resource.

40. A resource determination apparatus, comprising:
a memory configured to store program instructions; and
a processor configured to invoke the program instructions stored in the memory and perform in accordance with an obtained program:
configuring an association relationship between an SR resource and a parameter related to a physical resource; wherein the physical resource is a cell or a Transmission Reception Point, TRP, where a transmission failure occurs; and
notifying a terminal of the association relationship for the terminal to determine an SR resource for the physical resource according to the association relationship.

41. The apparatus according to claim 40, wherein the parameter related to the physical resource comprises:
a Beam failure Recovery, BFR, level; or,
a higher layer parameter list; or,
a Beam Failure Detection Reference Signal, BFD RS, set; or,
a CORESETPoolIndex, or an index of a subset of a control resource set, CORESET.

42. An information communication apparatus, comprising:
a memory configured to store program instructions; and
a processor configured to invoke the program instructions stored in the memory and perform in accordance with an obtained program:
sending a notification comprising a Beam Failure Recovery, BFR, level to a terminal, wherein the BFR level comprises a first level and/or a second level.

43. The apparatus according to claim 42, wherein the notification further comprises information about a Beam Failure Detection Reference Signal, BFD RS, set.

44. An information communication apparatus, comprising:
a memory configured to store program instructions; and
a processor configured to invoke the program instructions stored in the memory and perform in accordance with an obtained program:
acquiring a notification comprising a Beam Failure Recovery, BFR, level sent by a network side; and
acquiring the BFR level from the notification.

45. The apparatus according to claim 44, wherein the processor is further configured to invoke the program instructions stored in the memory and perform in accordance with an obtained program:
acquiring information about a Beam Failure Detection Reference Signal, BFD RS, set, from the notification.

46. The apparatus according to claim 44, wherein the processor is further configured to invoke the program instructions stored in the memory and perform in accordance with an obtained program:
determining information about a BFD RS set, according to the BFR level.

47. A resource determination apparatus, comprising:
a first determination unit, configured to determine a physical resource where a transmission failure occurs; and
a second determination unit, configured to determine a Scheduling Request, SR, resource for the physical resource where the transmission failure occurs, according to an association relationship between the SR resource and a parameter related to the physical resource, wherein the association relationship between the SR resource and the parameter related to the physical resource is configured by a network side or predefined.

48. A resource determination apparatus, comprising:
a configuration unit, configured to configure an association relationship between an SR resource and a parameter related to a physical resource; wherein the physical resource is a cell or a Transmission Reception Point, TRP, where a transmission failure occurs; and
a notifying unit, configured to notify a terminal of the association relationship for the terminal to determine an SR resource for the physical resource according to the association relationship.

49. An information communication apparatus, comprising:
a determination unit, configured to determine a Beam Failure Recovery, BFR, level; and
a notifying unit, configured to send a notification comprising the BFR level to a terminal, wherein the BFR level comprises a first level and/or a second level.

50. An information communication apparatus, comprising:
a first acquiring unit, configured to acquire a notification comprising a Beam Failure Recovery, BFR, level sent by a network side; and
a second acquiring unit, configured to acquire the BFR level from the notification.

51. A computer storage medium storing computer executable instructions, wherein the computer executable instructions are configured to cause a computer to perform the method of any one of claims 1 to 28.
